# EUROPEAN PATENT SPECIFICATION

(11) **EP 1 774 755 B1**
(45) Date of publication and mention of the grant of the patent: **20.10.2010**
(21) Application number: 05759479.8
(22) Date of filing: 29.04.2005
(51) Int. Cl.: H04L 12/66

(54) **METHOD AND APPARATUS FOR ENABLING DISCOVERY AND USE OF A SERVICE BY A CLIENT DEVICE**
VERFAHREN UND VORRICHTUNG ZUR ERMÖGLICHUNG VON ENTDECKUNG UND VERWENDUNG EINES DIENSTES DURCH EINE CLIENT-EINRICHTUNG
PROCEDE ET APPAREIL PERMETTANT A UN DISPOSITIF CLIENT DE DECOUVRIR ET D'UTILISER UN SERVICE

(30) Priority: 29.04.2004 US 836939
(43) Date of publication of application: 18.04.2007
(73) Proprietor: Cellport Systems, Inc., Boulder, CO 80302 (US)
(72) Inventor: SPAUR, Charles, W., Aurora, CO 80014 (US); PLUCIENKOWSKI, Jay, Lyons, CO 80540 (US); KENNEDY, Patrick, J., Boulder, CO 80304 (US); FUCHS, Axel, San Jose, CA 95120 (US); LEWELLEN, Mike, Longmont, CO 80503 (US)
(74) Representative: Davies, Simon Robert
(86) International application number: PCT/US2005/014989
(87) International publication number: WO 2005/109834

(56) References cited:
- WO-A-03/053048
- US-A- 5 293 635
- US-A- 5 646 939
- US-A1- 2002 097 193
- US-A1- 2002 116 103
- US-A1- 2002 133 273
- US-A1- 2002 156 558
- US-A1- 2003 065 432
- US-A1- 2003 206 520
- US-A1- 2005 065 678
- US-A1- 2005 065 678
- US-A1- 2005 075 768
- US-A1- 2005 131 595
- US-B1- 6 175 789
- US-B1- 6 427 101

## Description

### FIELD OF THE INVENTION

The present invention is directed to providing interoperability between or among devices and functions. In particular, embodiments of the present invention enable distributed devices and applications to interoperate even though such devices and applications are implemented on different platforms and use different communication link technologies.

### BACKGROUND OF THE INVENTION

As devices have become increasingly capable, the desirability of exchanging information between devices has increased. However, different devices often use different, incompatible communication link technologies. Accordingly, allowing devices to exchange information has been difficult.

The desirability of allowing communications between different devices that are not formally associated with one another, for example by being interconnected to the same network, has also increased as devices have become more portable. In particular, because any number of different devices can be associated with a user or a work space, it would be desirable to allow different devices to exchange information or share resources. For example, it would be desirable to allow a global positioning system (GPS) receiver associated with the user to provide location information to a personal digital assistant (PDA) associated with that user and running a mapping application to exchange information. Furthermore, it would be desirable to allow such a PDA to initiate automatic dialing of numbers held in a directory stored on the PDA by a wireless telephone also associated with the user. As yet another example, it would be desirable to allow such devices to communicate with a vehicle data bus, such as a controller area network (CAN) and to exchange information with one another, when located in or associated with a user's vehicle.

Although systems integrating the functions of various types of devices have recently been made available, such arrangements are not truly flexible. For example, devices integrating PDAs and telephones, or PDAs and GPS receivers, are now available. However, such devices tend to be cumbersome to use and expensive. In addition, the ability of such devices to communicate with additional devices has been limited or nonexistent. As still another example, vehicle manufacturers have offered cellular telephones that are capable of being interconnected to audio, visual display, and data entry functions provided by automobiles. However, such systems have been difficult or impossible to upgrade when new technology, for example new cellular communication technology, has become available. Such systems have also been incapable of allowing various functions otherwise available on the vehicle to be integrated with one another, thereby limiting the potential for information sharing, and have typically had no ability to interconnect a vehicle to devices other than a specific model of cellular telephone. Furthermore, such systems have been expensive.

In many cases, the difficulty with allowing different devices to share information has been the fact that different devices often use incompatible firmware or operating systems. Furthermore, different devices often use different communication link technologies. Accordingly, in order to allow devices to communicate with one another, it has been necessary for developers to specifically plan ahead, and provide extensive specialized code, in order to allow for such interoperability. In particular, developers have been required to anticipate and to provide programming to support interoperability between known devices as part of their development. Accordingly, devices have not been capable of interoperating with other devices unless prior knowledge of the exact operating parameters of such other devices was available. Also, devices intended for communication with one another would need to be provided with compatible communication link technology.

Attempts at overcoming some of these limitations have been made. For example, computer networks have been used to exchange information between different devices. However, such arrangements have required individual devices to provide all of the layers required for communications over that network, either through integration with the device itself or through the use of a specialized adaptor for that device. In addition, in order for different devices to share information, the higher level protocols of at least one of the devices must conform to those of the other device. Accordingly, even when devices have been designed to be compatible with a communication link comprising an existing network, they must still adapt to the requirements of one or more other devices if information is to be exchanged or resources shared. For example, attempts have been made to expand the types of devices in a vehicle that can be interconnected using a standardized communications protocol. However, such systems do not solve the problem of requiring each interconnected device to be specially adapted to the standardized protocol, the standardized protocol must include messages required by all the interconnected devices, and the interconnected devices must support the communications link technologies used by the system. Therefore, such systems have remained inflexible and expensive to implement, and have required prior knowledge of the devices that can be joined to the system and the capabilities of those devices.

As further examples, mobile devices, such as cellular telephone handsets and digital music players, are forced to utilize small displays and keypads in order to keep the physical device size and power requirements to a minimum. However, new generations of these devices have rapidly expanding computing power and data storage capabilities. Less portable or stationary computing devices may have much more capable keypad or other input technologies/facilities and/or much more capable display or other output technologies/facilities. These more capable technologies/facilities may be part of a vehicle dashboard "head unit" system, in the seat back of a seat on a passenger jet, a television monitor or audio system in a living room, or part of a personal computer system on the user's desktop. Furthermore, such computing devices may provide input, output or other services that are not available from a particular portable device. However, the enhanced capabilities of such less portable or stationary computing devices have remained largely unavailable to nearby portable devices.

WO 03/053048 discloses a method of enabling interaction between a portable device operated by a user and another device. The method involves detecting that the distance between the portable device and the other device is suitable for the interaction, suggesting to the user that a virtual link be established between the portable device and the other device, and establishing such a link upon confirmation from the user.

US 2005/0065678 discloses an enterprise-resource planning system in which information processing and data management may be integrated or otherwise combined with a vehicle-diagnostic-and-information system. The ERP system includes a first device for obtaining vehicle information from a vehicle and a second device for integrating the vehicle information into an information management system. The first device sends the vehicle information over a communication link to the second device.

### SUMMARY OF THE INVENTION

The present invention is defined in the appended claims and is directed to solving these and other problems and disadvantages of the prior art. According to embodiments of the present invention, an apparatus for enabling interoperability between and/or among different devices is provided. According to such an apparatus, a central communications interface system (CIS) has a connection framework process that allows different devices and applications to advertise their own services and search for the services of other devices or applications. In addition, the connection framework process functions as a facility or mechanism by which devices or applications can subscribe to and receive requested events from other devices or applications.

In accordance with embodiments of the present invention, when a content bearing mobile device comes in contact with a system providing enhanced capabilities, the mobile device can discover and access those capabilities. For example, embodiments of the present invention enable a content bearing mobile device to discover and access enhanced display capabilities available on another device with which the mobile device is in communication. In particular, the mobile device may communicate with the other device to discover the other device's capabilities, and with appropriate authentication and authorization, may establish a connection to the enhanced display available through the other device. In addition to display capabilities, embodiments of the present invention may permit a mobile device to make use of any enhanced capability available from another device, including, for example, desirable audio capabilities.

In accordance with embodiments of the present invention that enable a mobile device to access the enhanced display capabilities of another device, the portable device may provide content for display in the form of a high level markup language, such as HTML. The content provided by the mobile device may include controls that can be manipulated by the user, for example through a touch screen or other input device provided as part of or in connection with the system providing enhanced display capabilities to the mobile device. The stream of content provided by the mobile device may be generated by an application running on the mobile device. Furthermore, the stream of content delivered to the other device may be generated as an auxiliary output, such that the display on the portable device is also used to display content corresponding to or associated with the content displayed on the system with enhanced display capabilities. In accordance with still other embodiments of the present invention, user input received through the system providing enhanced display capabilities is sent back to the mobile device as a message or event. The mobile device may then access or receive the message or event, and act accordingly. That is, the application running on the mobile device can be controlled through input entered at the system providing enhanced display capabilities. In accordance with still other embodiments of the present invention, input may also be entered by a user through the mobile device itself. Changes in the content provided by the mobile device to the system having enhanced display capabilities may be updated on both the mobile device and the enhanced display in response to input from the user. In accordance with still other embodiments of the present invention, content displayed by a system providing enhanced display capabilities can be modified or enhanced to include content in addition to that supplied by the mobile device. For example, content related to the provider of the enhanced services or additional content that may be of interest to the user can be provided in combination or concurrently with content from the mobile device. Embodiments of the present invention may also provide executable script or code that is delivered from a portable device to another device platform for execution on the other device platform by a browser or some other facility of the other device platform.

Embodiments of the apparatus also provide interfaces to allow different devices using a number of different communications link technologies or communications channels to operably interconnect with the interface system. Such interfaces may include both the physical hardware (i.e., layer 1 of the standard network communication stack model), and software tools or modules that provide the functions of the link layer (layer 2), the network layer (layer 3) and the transport layer (layer 4), as required by the particular communication link technologies that are supported or enabled. The communication resources provided by the communications interface system can be used by applications to access or obtain information from different services, other applications or devices without a priori knowledge of the existence of the services, other applications or devices available in connection with a particular instance of a system or of the communication link interconnecting devices to the system. As a result, applications or services that wish to share information or processes with other applications or to access information and processes available from other applications or services, whether or not such applications are running on the same or different platforms or devices, need only conform higher level communications to messages that can be understood by the communications interface system. In particular, apart from using messages required by the communications interface system in order to perform functions such as advertising services and subscribing to events, embodiments of the communications interface system disclosed herein can handle, if necessary, the translation of specialized messages required by a service or application, or required in order to utilize specialized features of the service or application. Alternatively or in addition, embodiments of the communications interface system may provide a handle allowing applications to access raw data provided by services.

In order to provide support for different devices, services and applications, a communications interface system in accordance with embodiments of the present invention may provide various service engine components. The use of service engines allows the communications interface system to present one or more standard interfaces for devices interconnected to the system through the service engine. Such service engines enable industry or domain standard data formats to be utilized by interconnected devices. Accordingly, modifications to interconnected devices are not required in order to allow communication with the interface system. Furthermore, service engines that comprise adaptor software for devices that do not conform to standard data formats can be provided for nonstandard devices. By providing service engines or interfaces normalized to the particular interconnected devices, the interfaces appear as local data interfaces (e.g., appear like an interprocess communication). Furthermore, by supporting service or application level messages required by a service or application through service engines, any information or resource available through a service or application can be provided to any other service or application even if the separate services or applications would be completely unable to communicate with one another in the absence of the communication interface system.

In accordance with further embodiments of the present invention, a communications interface system may be interfaced to a device that provides a second communications framework process. Accordingly, multiple devices, each running a communication framework process in accordance with embodiments of the present invention, may operate as interconnected hubs.

### BRIEF DESCRIPTION OF THE DRAWINGS

Fig. 1A is a block diagram of components of a system in accordance with embodiments of the present invention;
Fig. 1B is a schematic depiction of components in accordance with embodiments of the present invention;
Fig. 2 is a block diagram depicting levels of communication between a communications interface system and an interconnected remote platform in accordance with embodiments of the present invention;
Fig. 3 is a block diagram depicting hardware components that may be included in a communications interface system in accordance with embodiments of the present invention;
Fig. 4 is a block diagram depicting a communications interface system with interconnected devices in accordance with embodiments of the present invention;
Fig. 5 is a flow chart illustrating a service initialization process in accordance with embodiments of the present invention;
Fig. 6 illustrates a service registration process in accordance with embodiments of the present invention;
Fig. 7 is a block diagram depicting a local application accessing data from an interconnected device in accordance with embodiments of the present invention;
Fig. 8 is a flowchart depicting aspects of the operation of a communications interface system in facilitating access to an interconnected device by a local application in accordance with embodiments of the present invention;
Fig. 9 illustrates a services discovery process in accordance with embodiments of the present invention;
Fig. 10 is a block diagram depicting a remote platform accessing data from a device in accordance with embodiments of the present invention;
Fig. 11 illustrates inter-platform control message processes in accordance with embodiments of the present invention;
Fig. 12 depicts communication channels in accordance with embodiments of the present invention;
Fig. 13 depicts information and message flows in connection with establishing access to a service in accordance with embodiments of the present invention;
Fig. 14 is a flowchart depicting aspects of the operation of a communications interface system in facilitating access to a service associated with a remote platform in accordance with embodiments of the present invention;
Fig. 15 illustrates communications between elements of a system in accordance with embodiments of the present invention;
Fig. 16 is a block diagram depicting a communications interface system interconnected to a number of remote platforms in accordance with embodiments of the present invention;
Fig. 17A illustrates the contents of a static services table record in accordance with embodiments of the present invention;
Fig. 17B illustrates the contents of a dynamic services table record in accordance with embodiments of the present invention;
Fig. 18 illustrates the contents of a services initiation table record in accordance with embodiments of the present invention;
Fig. 19 is a flowchart depicting aspects of the operation of a communications interface system in accordance with embodiments of the present invention in connection with an exemplary scenario;
Fig. 20 depicts a communications interface system in accordance with embodiments of the present invention in an exemplary application;
Fig. 21 is a block diagram depicting a communications interface system interconnected to a remote platform in accordance with embodiments of the present invention;
Fig. 22 is a flowchart depicting aspects of service discovery and the establishment of connections in accordance with embodiments of the present invention;
Fig. 23 is a flowchart depicting application specific messaging between a communications interface system and a remote platform in accordance with embodiments of the present invention;
Fig. 24 is a flowchart depicting aspects of the control of an application running on a remote platform using a service running on a communications interface system;
Fig. 25 is a flowchart depicting aspects of a process for providing security and customized content in accordance with embodiments of the present invention;
Fig. 26 is a block diagram depicting a communications interface system interconnected to a remote platform in accordance with other embodiments of the present invention;
Fig. 27 is a flowchart depicting aspects of the operation of a system incorporating an integrated display resource in accordance with embodiments of the present invention; and
Fig. 28 is a flowchart depicting aspects of the operation of a remote platform in communication with a communications interface system in accordance with embodiments of the present invention.

### DETAILED DESCRIPTION

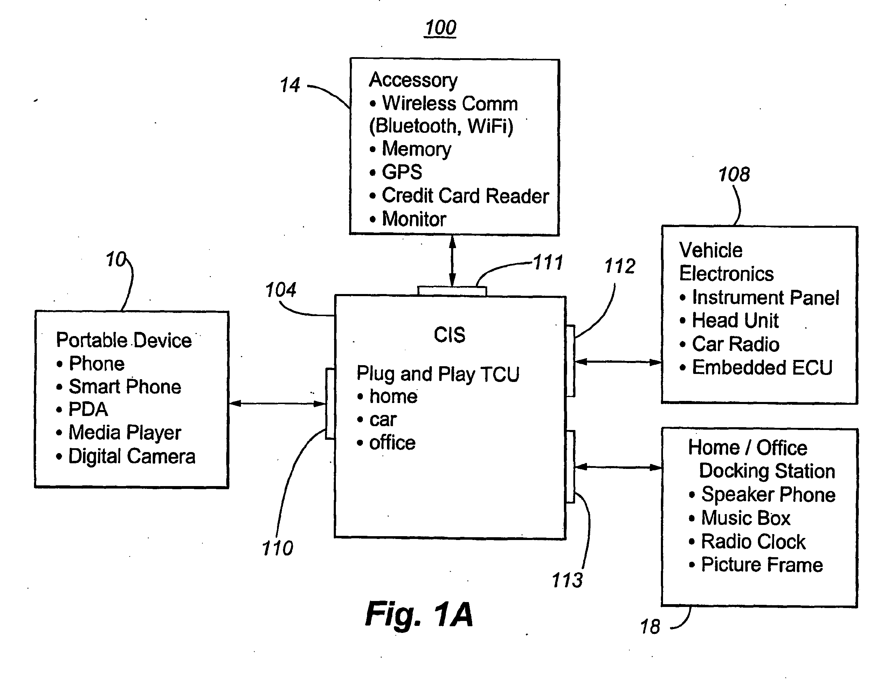

Fig. 1A is a block diagram depicting components of a communication system 100 in accordance with embodiments of the present invention. In general, the communication system 100 includes a plug and play telematics control unit or communications interface system (CIS) 104 that may be used in and/or specially configured for home, automobile, office, or other environments. As shown in Fig. 1A, the CIS 104 may be interconnected to a portable device 10 such as a telephone, smart telephone, cellular telephone, personal digital assistant, media player, digital camera, or other portable device. The CIS 104 may additionally be interconnected to one or more accessories 14. Examples of accessories include wireless communication devices, including Bluetooth or WiFi interfaces, memory, global positioning system (GPS) devices, magnetic card readers, monitors, or other accessory devices. Where an accessory 14 is an interface, it may function as a modular portable device port or other type of port 110. Embodiments of a CIS 104 may also be interconnected to vehicle electronics 108. For instance, a CIS 104 may be interconnected to the instrument panel, head unit, car radio, an embedded electronic control unit, or other vehicle electronics, to permit access to or control of information and applications associated with a vehicle 108. Embodiments of a CIS 104 may themselves be portable. Accordingly, a CIS 104 may be interconnected to a docking station 18. A docking station 18 may be located, for example, in a user's home and/or office, and may itself comprise a speaker phone, music box, radio clock, picture frame, or other device. Accordingly, it can be appreciated that a CIS 104 may be operably interconnected to a wide variety of electronic devices. Furthermore, such interconnections may be used to share or obtain information between applications running on or associated with the CIS 104 or various interconnected components, such as devices 10, accessories 14, docking stations 18, or vehicle electronics 104. In addition, one or more of the various portable devices 10, accessories 14, vehicle electronics 108 or docking station 18 interconnected to a CIS 104 may comprise a remote platform.

With respect to the various components interconnected to a CIS 104, different ports may be provided. For instance, a portable device port 110 may be used to interconnect the CIS 104 to one or more portable devices 10. Examples of communication link technologies used in connection with a portable device port 110 include universal serial bus (USB); simple serial port (e.g., RS-232/RS-422); IEEE 1394; analog or digital audio; Bluetooth; IEEE 802.11, including local area network, wide area network and/or broadband versions, including WiFi, WiMax and WiMobile (IEEE 802.11); ultra-wide band (UWB); compact flash slot, secure digital slot or other memory card slot; Ethernet; or other communication link technologies. An accessory port 111 may be provided for interconnecting accessories, to a CIS 104. Communication link technologies suitable for use in connection with an accessory port 111 include USB; simple serial port; IEEE 1394; analog or digital audio; UWB; compact flash slot, secure digital slot or other memory card slot; Bluetooth; IEEE 802.11; Ethernet or other communication link technologies. A vehicle interface port 112 for interconnecting to electronics associated with a vehicle 108 may include a Media Oriented Systems Transport (MOST) system, controller area network (CAN), IDB-M (1394) or other interface. A docking station port 113 may use USB; simple serial port IEEE 1394; Ethernet, analog or digital audio; Bluetooth; IEEE 802.11; UWB; or other communication link technology. As can be appreciated by one of skill in the art from the description provided herein, the particular ports 110-113 provided by a CIS 104 may be selected in view of the intended use or feature levels of the CIS 104. Furthermore, multiple instances of a port 110-113 may be provided. In addition, a single port 110-113 may comprise multiple port types, and support multiple interconnected devices, accessories, or other components 10-18 or 108. For instance, a single USB port may be interconnected to various components, such as one or more portable devices 10, one or more accessories 14, or one or more docking stations 18.

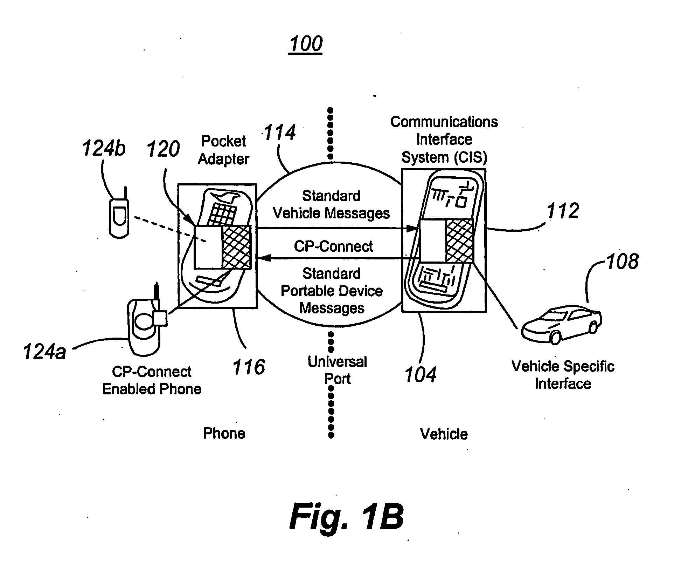

Fig. 1B illustrates an exemplary context for a communication system or apparatus 100 in accordance with embodiments of the present invention. In the example communication system 100 shown in Fig. 1B, the communications interface system (CIS) 104 is interconnected to vehicle electronics 108 through a wire line vehicle specific interface or vehicle interface port 112. In general, the communications interface system 104 is a platform that provides a communication environment 114 featuring a communication framework process, as will be described in greater detail elsewhere herein. The communications interface system 104 illustrated in Fig. 1B provides a portable device port 110 (See Fig. 1A) comprising a universal port that allows a mechanical adaptor or pocket adaptor 116 to be interconnected to the communications interface system 104. The pocket adaptor 116 may receive a remote platform 120, such as a portable device 10 comprising a cellular telephone 124a running the communication framework process also provided by the communications interface system 104. Alternatively, the pocket adaptor 116 may receive a portable device 10 comprising a non-communication framework process enabled cellular telephone 124b, in which case a communication framework process may be provided by the pocket adaptor 116 (its product adaption may comprise a remote platform 120). As yet another alternative, a portable device 10 comprising a non-communication framework process enabled telephone 124b may communicate with the communications interface system 104 through a service engine, as will be described elsewhere herein.

The example communication system 100 illustrated in Fig. 1B allows standard vehicle messages to be passed from the communications interface system 104 to the vehicle 108, and enables the telephone 124 to access services, information or resources (hereinafter services) available through the vehicle electronics 108. The arrangement 100 also allows standard messages to be passed to the telephone 124. However, such communication links to the vehicle using the CIS 104 are not limited to a telephone 124 supported by a holder or cradle. Accordingly, the system 100 in accordance with embodiments of the present invention allows portable or embedded devices 10, 14 to be interfaced with a vehicle 108, without requiring either the vehicle electronics 108 or the device 10, 14 to directly interface with the other interconnected device.

In particular, the provision of a connection framework process allows devices interconnected to the communications interface system and/or applications running on the communications interface system 104 to advertise services. These communications interface system resident services can be utilized by other applications running on or interconnected to the communications interface system 104, a platform 120 that is remote or separate from the CIS 104 (such as the telephone 124), a vehicle 108, or on or interconnected to any other platforms supporting the connection framework process sharing protocols. In a similar manner, services running on or available through a remote computing platform 120, such as a telephone 124a, can advertise services to be utilized by communications interface system 104 resident applications or applications resident on other platforms. Accordingly, by providing a facility by which communications between applications and/or services are standardized, including distributed applications, such as the telematics applications in the example illustrated in Fig. 1B, embodiments of the present invention allow a network effect between devices and applications to be created, adding value to the individual devices and applications.

Services can relate to or be provided using any source of information associated with a device or any resource, including applications. Examples of services include advanced displays, user interfaces, digital or analog media players, power/charging, stereo audio capability, global positioning system (GPS) device data, onboard vehicle diagnostics data (such as OBD-II), a text-to-speech (TTS) engine, a speech recognition engine, a speech-based user interface facility, cellular telephones (embedded, portable and/or plug and play) or other communication devices, and personal digital assistants (PDAs).

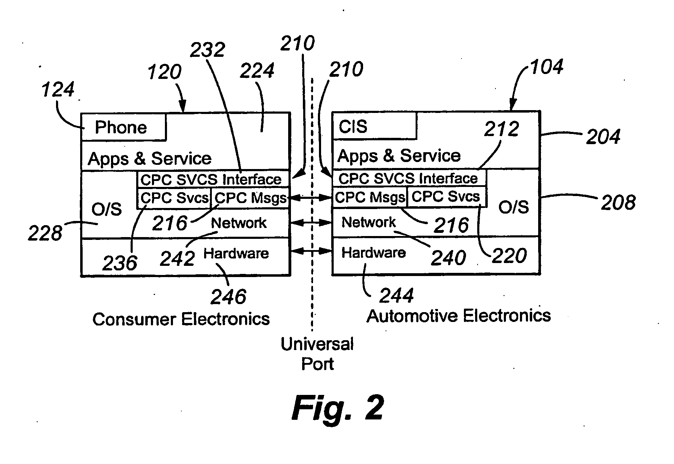

With reference now to Fig. 2, the relationship between software and hardware elements of components included in a communication arrangement such as the communication system 100 of Fig. 1A or 1B, are illustrated. As seen in Fig. 2, applications and services 204 may run on the communications interface system 104. In particular, applications and services 204 interact directly with the operating system 208 and with an application and services interface 212 function of a connection framework process 210. The application and services interface 212 utilizes communications interface system messages (or control messages) 216 and provides access to connection interface system services 220, also provided by the connection framework process 210. In accordance with embodiments of the present invention, the connection framework process 210 supports various protocols, such as Internet Protocol (IP), transmission control protocol (TCP), universal datagram protocol (UDP) and other protocol(s) for use with any universal plug and play device(s). In addition, embodiments of the present invention may include an operating system 208 that supports multi-threading and/or multi-tasking, and that includes protection mechanisms to prevent applications from corrupting system resources. The operating system 208 may also provide portable operating system interface (POSIX) compliant mechanisms for inter-process communications (IPC).

In the example arrangement illustrated in Fig. 2, the remote platform 120 is a connection framework process 210 enabled telephone 124. As shown in Fig. 2, applications and services 224 provided as part of or associated with the remote platform 120 interact directly with the remote platform's operating system 228 and have direct access to an application and services interface 232 of the connection framework process 210. The application and services interface 232 of the remote platform 120 utilizes communications interface system messages 216 and makes available connection interface system services 236. As can be appreciated by one of skill in the art from the description provided herein, the connection framework process 210 and the associated functions 232, 236 running on the remote platform 120 (i.e., the telephone 124), need not be identical to those running on the communications interface system 104. In connection with embodiments of the present invention, the operating system 228 on the remote platform 120 may provide the same or similar capabilities as the operating system 208 running on the communications interface system 104.

As depicted in Fig. 2, the communications interface system messages 216 used by the communications interface system 104 and the connection framework process enabled remote platform 120 may be identical. That is, a set of messages may be defined. As will be described in greater detail elsewhere herein, using communications interface system messages 216, devices and applications can advertise and subscribe to services. In addition to providing a mechanism for identifying and accessing specific services, the connection interface functions provided by the application and services interfaces 212, 232, the connection interface system services 220, 236, and the communications interface system messages 216 control the network 240, 242 and hardware or physical 244, 246 layers, allowing applications and services 204, 224 to communicate with one another using communications interface system messages 216 and/or using other higher level protocols. For instance, according to embodiments of the present invention, layers 1-4 of the network communication stack model are attended to by the functions and services provided by the communications interface system connection framework process 210 and by the connection framework process 210 (if any) of remote devices 120 (e.g., telephone 124) connected to the communications interface system 104. As described in greater detail elsewhere herein, control of the network and physical layers of communications links between platforms may be accomplished using communications interfaces incorporating interface engines.

As depicted in Fig. 2, the communications interface system 104 may be part of or interconnected to automotive electronics. Accordingly, embodiments of the present invention may be deployed as a part of systems 100 installed in vehicles. Furthermore, the remote platform 120, as depicted in Fig. 2, may comprise consumer electronics, including devices 10 or accessories 14 that are not themselves designed or specially adapted for use with a specific vehicle. As will be described in greater detail elsewhere herein, the communications interface system 104 may be interconnected to devices and/or applications, either through wire line or wireless connections, in addition or as an alternative to being interconnected to the electronic systems of a vehicle. Furthermore, if a remote platform 120 providing a communication framework process, such as the telephone 124 in Fig. 2, is included, devices and applications may be interconnected to the remote platform 120. Accordingly, a communications interface system 104 and an interconnected remote platform 120 (such as a telephone 124) may function as interconnected communication hubs.

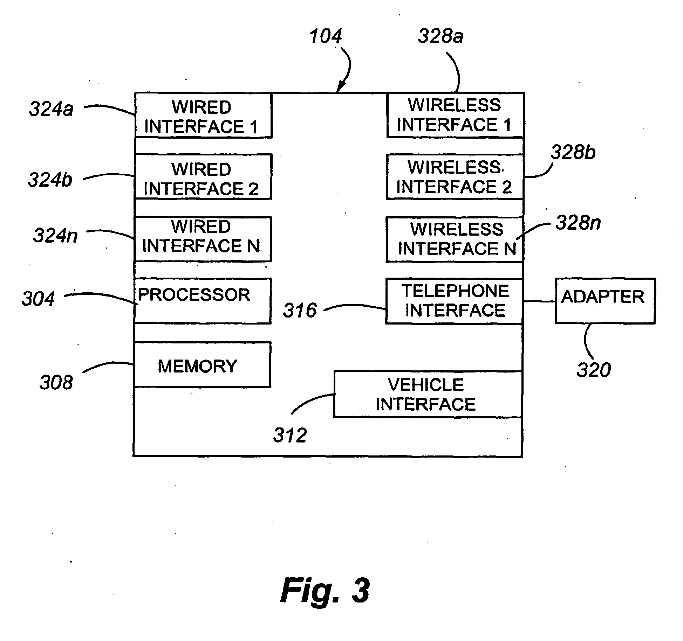

With reference now to Fig. 3, various hardware components that may be included as part of a communications interface system 104 in accordance with embodiments of the present invention are depicted. In general, a communications interface system 104 may include a processor 304 capable of running operating system software 208 and application software, including applications and associated services 204. In addition, the processor 304 executes instructions in connection with the operation of an installed connection framework process 210, including the communication services interface 212, communication interface system services 220, and communications interface system message 216 functions. In accordance with embodiments of the present invention, the processor 304 may include a general purpose programmable processor or controller.

Memory 308 may be provided for storing operating system 208, application 204, communications framework process 210 and communication services and messages programming 212-220, and for storing data associated with the operation of such applications and programs. The memory 308 may comprise various storage devices alone or in combination. For example, the memory 308 may comprise solid state memory, such as DRAM or SDRAM, magnetic storage devices, or optical storage devices. In addition, the memory 308 may be integral to the processor 304, in whole or in part. For example, in accordance with embodiments of the present invention, the processor 304 and memory 308 may be implemented as an integrated controller, with operating system 208, application 204, communications framework process 210 and communication services and messages 212-220 programming stored as firmware. In connection with embodiments of the present invention, including embodiments having programming maintained as firmware, it is advantageous to provide flash memory or other reconfigurable memory devices 308, to allow for the expansion of supported services and devices, and to facilitate software upgrades and patches.

The communications interface system 104 additionally includes a number of interfaces. For example, in connection with embodiments in which the communication interface system 104 is installed in a vehicle, a vehicle interface 312 may be provided. The vehicle interface 312 provides a physical connection to onboard vehicle systems, such as to an onboard network. In addition, the vehicle interface 312 provides the necessary formatting of instructions received from or delivered to the vehicle. As an example, the vehicle interface 312 may comprise a controller area network (CAN) interface. In an exemplary embodiment of the present invention, the vehicle interface 312 may be provided as a daughter board. In accordance with other embodiments, the vehicle interface 312 is integral to or included in the communications interface system 104. In addition, a communications interface system 104 may include vehicle interfaces 312 for a number of different vehicle systems services or networks, for example to permit simultaneous connections with multiple systems included in a single vehicle.

The communications interface system 104 may also include a telephone interface 316. An adaptor 320 may be associated with the telephone interface 316, to provide the necessary physical connection to an interconnected telephone (e.g., telephone 124). Accordingly, the adaptor 320 may comprise a cord for providing electrical interconnections between the communication interface system 104 and the telephone 124 and/or a pocket type adaptor for providing an electrical interconnection to the telephone and for physically holding the telephone 120 or 124 in position. By providing adaptors 320 configured for different telephones 124, a wide variety of telephone configurations can be accommodated. Alternatively, the telephone interface 316 may interconnect directly to a telephone 124, without the use of an adaptor 320.

A communications interface system 104 may additionally include one or more wired interfaces 324. Although three different wired interfaces 324a-n are shown in Fig. 3, it should be appreciated that any number of wired interfaces 324 may be provided. Examples of wired interfaces 324 that may be provided include universal serial bus (USB), IEEE 1394, RS-232, intelligent transportation system databus (IDB), controller area network (CAN), Ethernet, Media Oriented Systems Transport (MOST) system or other wired interfaces. In addition to such interfaces for exchanging electrical signals, wired interfaces 324 may additionally include interfaces for enabling optical communications. A wired interface '324 may generally interconnect a communications interface system 104 to a device, to a network, or to a remote platform 120.

A communications interface system 104 in accordance with embodiments of the present invention may also include a number of wireless interfaces 328. Although three wireless interfaces 328a-n are illustrated in Fig. 3, it should be appreciated that any number of wireless interfaces 328 may be provided. Examples of wireless interfaces 328 include Bluetooth; ultra wideband (UWB); WiFi, such as IEEE 802.11a, 802.11b, and 802.11g; personal area networking, such as IEEE 802.15.3a, CDMA2000; and DATATAC, GSM/GPRS/EDGE, UMTS, Mobitex or integrated digital enhanced network interfaces. A wireless interface 328 may generally interconnect a communications interface system 104 to a device, to a network, or to a remote platform 120.

As can be appreciated by one of skill in the art, wired 324 and wireless 328 interfaces may operate in connection with or incorporate various communication protocols. Examples of such communication protocols include transport control protocol/Internet protocol (TCP/IP), and universal datagram protocol (UDP). In addition, wired 324 or wireless 328 interfaces may comprise ports 100, 111, 112 and/or 113.

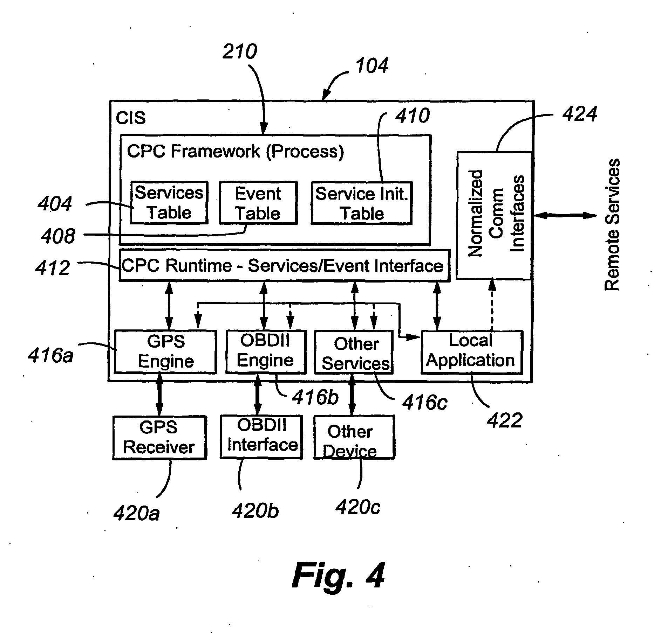

With reference now to Fig. 4, a block diagram of a communications interface system 104 operatively interconnected to a number of devices is shown in functional block diagram form. In general, the connection framework process 210 is the central process or system of the communications interface system 104. The connection framework process 210 catalogs registered services, handles events, and controls the synchronization of information on available services and information. Alternatively or in addition event handling and the synchronization of information can be handled by facilities available from the operating system 208, 228 (see Fig. 2).

The connection framework process 210 provides a services table 404 for advertising services available from devices or applications to other devices or applications associated with the connection framework process 210. Applications such as service engines may use a service interface provided as part of the connection framework process 210 to advertise services or to advise client applications of changes in service status and availability. Services and applications can discover information and resources available to them from other services or applications by making reference to the services table 404 using a client interface provided as part of the connection framework process 210. Accordingly, the services table 404 may contain a registry of services and service descriptors, the functions to be used when accessing those services, the current status of the service, privileges required to access the service, the class and performance criteria of any associated device and other information regarding available services. Furthermore, it should be appreciated that a "service" may comprise or be provided by an application 422, device 420, or combination of one or more applications and devices. For example, a service comprising a navigation service may be provided by a GPS receiver 420a, an associated GPS service engine 416a, and a mapping application 422. Furthermore, although certain examples describe services that are provided through devices 420, native facilities, service engines 416 and/or applications running on a communications interface system 104 to a remote platform 120 and/or an application 422 running on a remote platform, embodiments of the present invention are not so limited. For example, a service may be provided by a remote platform 120 to another remote platform 120 or to a communications interface system 104. As a further example a service on or provided through one platform 104, 120 may operate in cooperation with a service on or provided through another platform 104, 120.

In addition, the connection framework process 210 supports an event subscription and notification scheme using an event table 408. In particular, the event scheme supported by the connection framework process 210 provides for the delivery of application specific event objects when events occur. In one or more other embodiments, instead of the connection framework process 210, the underlying OS (operating system) can provide the event objects through an event table 408. In general, these event objects contain data and/or references to executable functions. The event table 408 contains lists of events and processes subscribed to each event. When an event occurs, the connection framework process 210 checks the event table 408 for processes to be notified of the event. Qualified services and applications (i.e., services and applications with sufficient privileges) will be allowed to register to generate and receive events. Applications accessing the table will generally use a set of predefined messages (i.e., communications interface system messages 216) for the purpose of registering to receive events.

The connection framework process 210 may also provide a service initiation table 410. In general, the service initiation table 410 contains information regarding service engines. Such information may include the executable file of local service engines and applications, whether they are to be started on boot up or in response to a request from another service engine or application, and other information.

The communications process runtime services/event interface 412 provided as part of or by the connection framework process 210 controls the advertisement of services and the discovery of services. Furthermore, the communications process runtime services/event interface 412 is used by services and applications in connection with subscribing to events and broadcasting events. In general, the connection framework process 210 may record event subscriptions received from the communications process runtime services/event interface 412 as communications runtime calls in the event table 408. When an application (or service engine) generates an event, again through a communications runtime call passed across the communications process routine service/event interface 412, the connection framework process 210 checks the event table 408 and notifies each subscriber of the event. Both service engines and applications may subscribe to events. Accordingly, by providing for communications runtime calls placed through the communications runtime services/event interface 412, and by providing a services table 404 and an event table 408, the connection framework process 210, in connection with the client interface and service interface, is able to catalog requested services, synchronize the delivery of services, handle events, and control the synchronization of information on available services with any other connected applications or resources. Accordingly, it can be appreciated that the connection framework process 210 running on the communications interface system 104 functions as the central process of the communications interface system 104.

In addition, one or more service engines 416 (e.g., service engines 416a-c) may be provided for interfacing various locally connected devices 420 from which services are available to the connection framework process 210 through the communications runtime services/event interface 412 and to client applications. In accordance with further embodiments of the present invention, a service engine 416 may interface a client application to the connection framework process 210 and to services, with or without the cooperation or assistance of a port. For example, a GPS receiver 420a, onboard diagnostics II (OBD-II) interface 420b, or some other device 420c may be interconnected to the communications interface system 104 through a direct interconnection, such as provided by a port or interface with a vehicle communication bus 112 or by a direct interconnection with the device 420 through a port or interface (e.g., port 110, 111, 113, see Fig. 1A). In general, a service engine 416 presents a standard interface for applications using an interconnected service. Accordingly, a service engine 416 may function as adaptor software to adapt or translate messages in a message or data format used by the interconnected service or device providing the service 420 to the messages and message format or protocol of the connection framework process 210 and the communications runtime services/event interface 412. A service engine 416 may also format application specific messages into the format or protocol of the connection framework process and/or of a client application. In addition to the service engine 416, various local applications 422 may run on the communications interface system 104.

The communications interface system 104 may additionally provide a normalized communication interface 424. In general, the normalized communication interface 424 provides access to services on devices that are remotely connected to the communications interface system 104. As will be described in greater detail elsewhere herein, a normalized communication interface 424 allows applications (e.g., local application 422 or services provided through locally connected devices 420) to access services provided by remote devices, and allows services to be provided to remote applications. In general, a communication interface 424 maps communication technology-specific addresses to network normalized service pipes or channels. Examples of communications technologies that may be used to establish communication channels include TCP/UDP, USB, and simple serial ports. Other examples of communications technologies over which communication channels may be established through a communication interface 424 include a controller area network (CAN) bus or a Media Oriented Systems Transport (MOST) bus. By accessing service pipes or communication channels through a communication interface 424, applications are able to access local and remote services in a consistent manner. Accordingly, to the service specific functions, the normalized interfaces 424 appear very much like an Internet "socket" interface. Furthermore, as can be appreciated from the description provided herein, a communication interface may comprise or incorporate features of one or more ports 110-112 (See Fig. 1A).

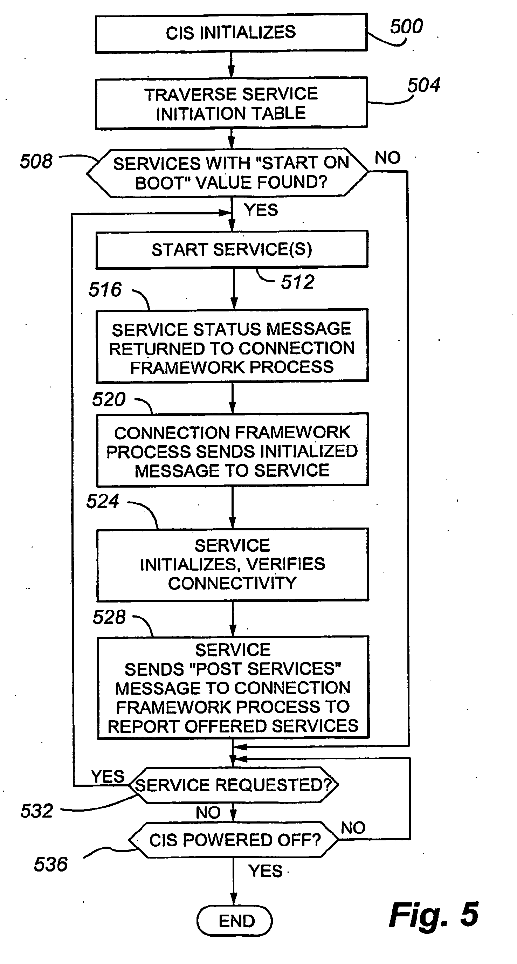

With reference now to Fig. 5, a service initialization process in accordance with embodiments of the present invention is illustrated. Initially, at step 500, the communications interface system 104 initializes (i.e., boots up), for example when the system is turned on. The connection framework process 210 then traverses the service initiation table 410 (step 504). At step 508, a determination is made as to whether services having a "start on boot" value were found by the connection framework process 210. If services with a "start on boot" value have been found in the service initiation table 410, service engines 416 or other applications associated with those services are started (step 512). A service status or establish message is then returned to the connection framework process 210 by each service that has been started and a service control channel is established for each service (step 516). In return, the connection framework process 210 sends an initialize message to each service that has been started (step 520). The service or services then initialize, and verify connectivity with the connection framework process 210 (step 524). Each service may then send a "post services" message to the connection framework process 210 to report the services offered by that service for listing in the services table 404 (step 528).

After "post services" messages have been sent, or after it is determined that no services with a "start on boot" value are listed in the service initiation table 410, a determination is made as to whether a service has been requested (step 532). For example, a service may be started after the communications interface system 104 itself has been started in response to an associated device 420 being started, receiving a request from a client application 422 or some other event, such as plugging a telephone 124 into a pocket adaptor 116. If a service is requested, the process returns to step 512 to start the invoked service and enter the associated services in the services table 404.

If it is determined that no service has been requested, a determination is then made as to whether the communications interface system 104 has been powered off (step 536). If the communications interface system 104 has not been powered off, the process may return to step 532. If the communications interface system 104 is powered off, the process ends.

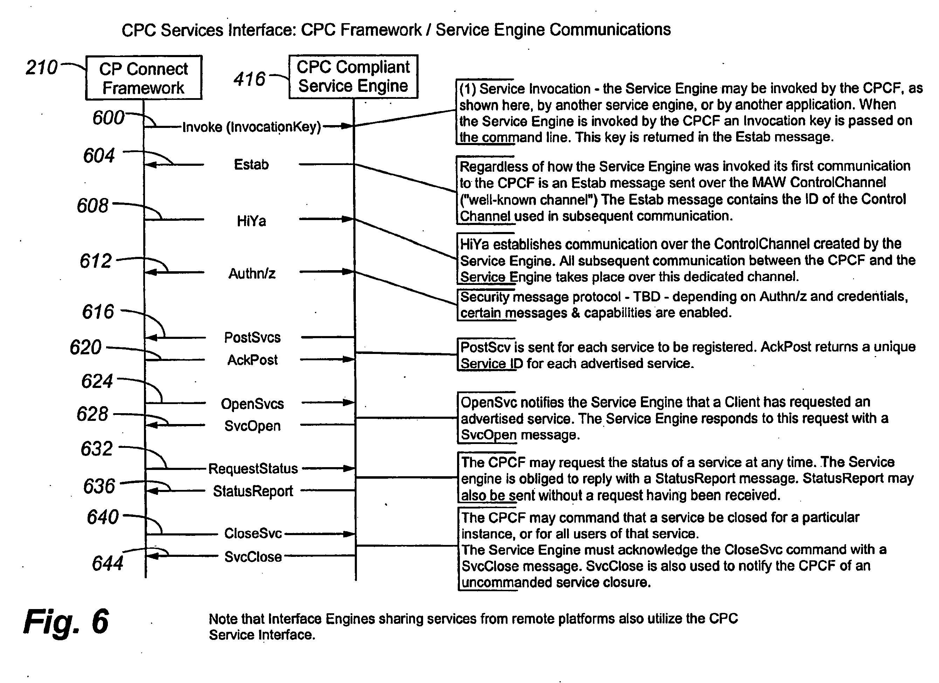

With reference now to Fig. 6, a service registration process in accordance with embodiments of the present invention is shown. In particular, an exchange of messages between a connection framework process 210 and a service engine 416 is illustrated. Initially, the connection framework process 210 sends an invoke service message to the service engine 416 being requested (step 600). In general, an invoke message may be any action required to start or access a service engine. Alternatively, an invoke message can be sent to a service engine 416 by another service engine, or by another application, such as a client application. The invoke service message includes an invocation key, which may be passed on the command line of the invoke service message. As can be appreciated by one of skill in the art from the description provided herein, an invoke message may be sent at various times, such as at system boot up, at the time a service is needed, or when a client application starts.

In reply to the invoke message, the service engine 416 returns an establish message (step 604). Regardless of how the service engine 416 was invoked, its first communication to the connection framework process 210 (i.e., the establish message) is sent over the main or public control channel of the connection framework process 210. The establish message returned by the service engine 416 contains the invocation key provided by the connection framework process 210, and also identifies the service control channel to be used in connection with further communications.

The connection framework process 210 then returns a Hi Ya message to establish communication over the service control channel created by the service engine 416 (step 608). Following establishment of the dedicated service control channel, subsequent communications between the connection framework process 210 and the service engine 416 occur over that dedicated channel.

Also following establishment of the service control channel, security messages may be exchanged (step 612). In one embodiment, such security related measures can be implemented using at least portions of the systems and/or methods of U.S. Patent Application No. 10/767,548, filed January 28, 2004, and entitled "Secure Telematics," that is assigned to the assignee of this application. In general, security messages may comprise authorization and authentication service protocols. For example, the security protocols may allow the connection framework process 210 to verify the identity of an application requesting access to the service associated with the service engine 416, and verify that the application is authorized to access that service. In addition to providing data security, such procedures may also be used in connection with implementing licensing agreements regarding device, service and/or application interoperability.

A service engine 416 may post the services available through it to the connection framework process 210 by sending a post services message to the connection framework process 210 (step 616). Using the service description information and identifier that is provided as part of the post service message, the connection framework process scans the services table 404 for a matching service. If no match is found, the connection framework process allocates a new service ID, enters the service description information in the services table 404, and returns this new service ID in an acknowledge post message (step 620). If a match between the service being posted and a service already entered in the services table 404 is found, the connection framework process 210 returns the existing service ID to the service engine 416 in an acknowledge post message. By performing this matching function, the connection framework process 210 assures that service IDs are unique, and that there are no duplicate service advertisements contained in the services table 404. For example, when a service engine 416 is restarted, or in connection with services provided by a start on demand service engine 416, entries in the services table 404 for a service will exist when a corresponding post service message is received. Accordingly, by matching the contents of a post service message to any existing service advertisements, the connection framework process 210 can control the proliferation of service IDs and support error recovery. In accordance with embodiments of the present invention, all service engines 416, regardless of how they have been invoked, use post services messages and the reply acknowledge post messages to synchronize service advertisement information with connection framework process assigned service IDs.

When a client, such as a client local application 422; requests an advertised service (i.e., a service listed in the services table 404), an open service message is sent by the connection framework process 210 to the applicable service engine 416 (step 624). The service engine responds to the request to open an advertised service available through that service engine 416 with a service open message (step 628).

The connection framework process 210 may request the status of a service from an associated service engine 416 at any time using a request status message (step 632). The service engine 416 replies with a status report message (step 636). A status report message may also be sent by a service engine 416 without a request status message having been received. Accordingly, a service engine 416 may send a status report message periodically, or after the occurrence of certain events.

The connection framework process 210 may command a service engine 416 to close a service for a particular instance (i.e., in connection with a particular client), or for all users of an associated service using a close service message (step 640). Accordingly, a close service message may identify one or more instances of a provided service. In reply to a close service message, the service engine 416 returns a service close message as an acknowledgment (step 644). A service engine 416 may also send a service close message to the connection framework process 210 to notify the connection framework process 210 of an uncommanded service closure.

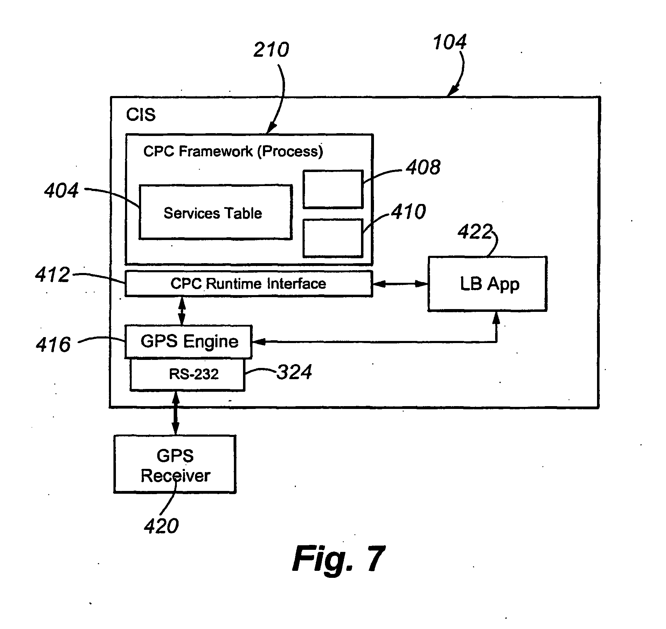

With reference now to Fig. 7, a block diagram illustrating a local client application 422 accessing a service provided by a device 420 that is directly interconnected to a communications interface system 104 through a wired interface 324 is shown. More particularly, the example of Fig. 7 illustrates a location based client application 422 accessing data from a GPS receiver device 420 interconnected to the communications interface system 104 by a RS-232 type wired interface 324. The message set used for communications between the connection framework process 210, the service engine 416, and the application 422 may be the same as those described in connection with the examples such as those given in connection with various of the figures provided herein. That is, the use of a wireline interface 324, such as the RS-232 serial interface in the example of Fig. 7, does not alter the messages that the participants in the communication are required to use. Accordingly, modifications to, for example, an application 422, are not required in order to communicate with devices 420 interconnected to the communications interface system 104 using different interfaces. In addition, a device 420, that is capable of supporting messages corresponding to those used by the communications interface system 104, such as the GPS receiver illustrated in Fig. 7, need not be specially modified in order to operate in association with an application 422. The example arrangement illustrated in Fig. 7 demonstrates that, by providing a service engine 416 that incorporates or operates in connection with the RS-232 wired interface 324 necessary for communications with the device 420 over the RS-232 serial interconnection, neither the device 420 nor the application 422 needs to be modified in order to interoperate. That is, by providing a suitable service engine 416, an application 422 associated with the communications interface system 104 can be operatively connected to a separate device 420 without prior knowledge or special adaptation for the type of interface used by the device 420.

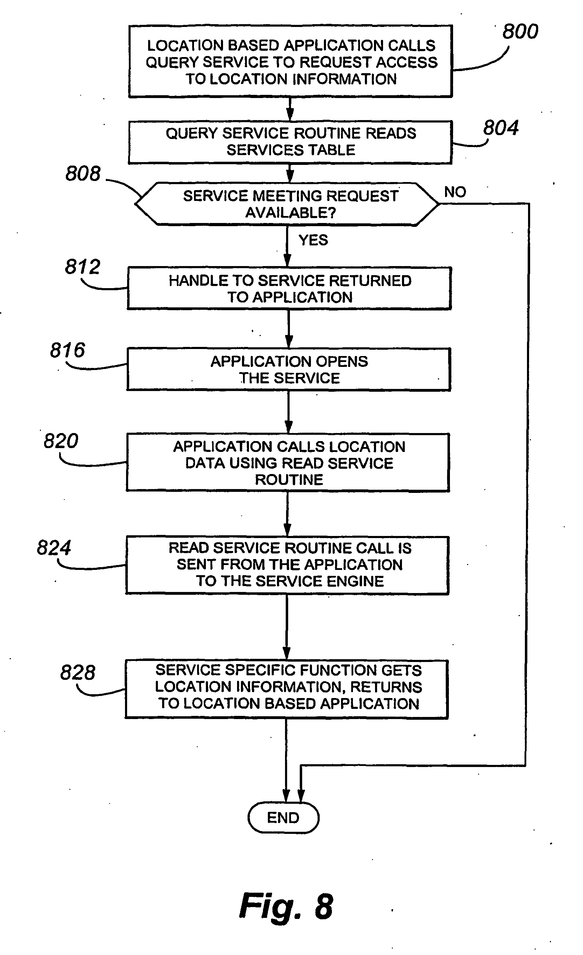

With reference now to Fig. 8, the operation of a communications interface system 104 in connection with providing a local application 422 access to a service provided by an interconnected device, 420 for example, as generally illustrated in Fig. 7, is depicted. For illustration purposes, the local application 422 in the present invention is a client location based application, and the service comprises location information provided by a GPS device 420. Initially, at step 800, the location based application 422 calls a query service routine requesting access to normalized location data from a GPS device. The query service routine causes the connection framework process 210 to read the services table 404 (step 804). At step 808, a determination is made as to whether a service meeting the request from the location based application 422 is available. If the requested service is available, and assuming that the application 422 is properly authenticated and authorized, a handle to the requested service is returned to the application, for example in the form of a service list identifying the available service or services (step 812). The application then opens the service (e.g., by contacting the service engine 416) using an open service message that includes a specification of the handle to the service, and service resources are allocated to support the location based application 422 (if required) (step 816).

At step 820, the location based application 422 calls location data using a read service routine. In particular, a read service message specifying the handle associated with the open service is sent from the location based application 422 to the service engine 416 (step 824). The service specific send service message is then formatted as required by the link between the service engine 416 and the device 420, and the requested information is obtained from the device 420 and is returned to the location based application by the service engine 416 (step 828). The information may be returned to the location based application 422 by writing it to a buffer or object provided by the application 422. After returning the requested information to the application at step 828, or after determining that a service meeting the application's request is not available at step 808, the process may end.

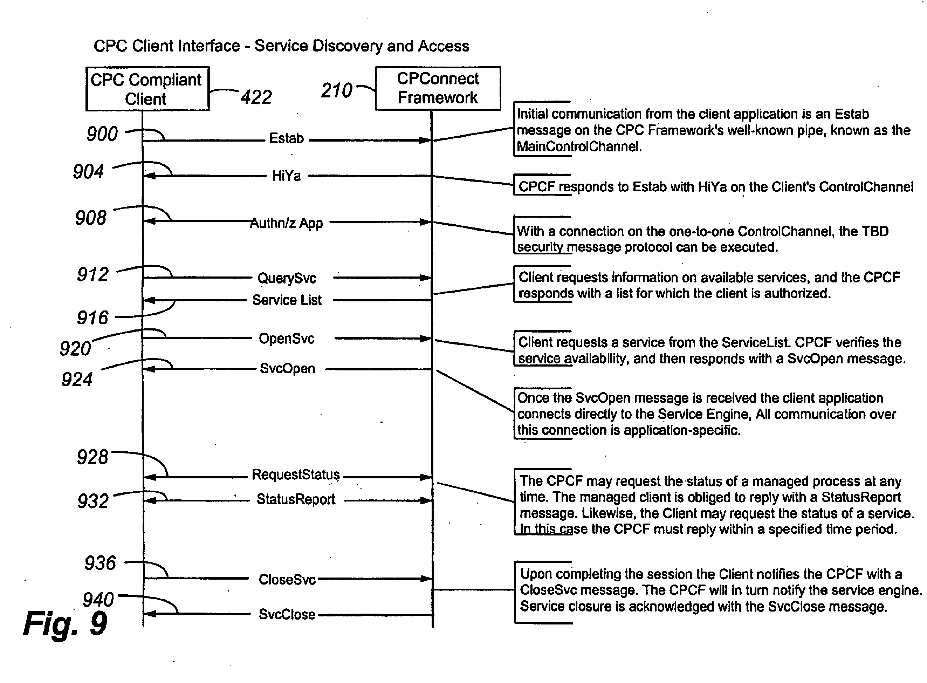

With reference now to Fig. 9, a service discovery process in accordance with embodiments of the present invention is shown. Initially, at step 900, a client application 422 sends an establish message using the public or main control channel of the connection framework process 210. In response, the connection framework process 210 sends a HiYa on the client application's control channel that was provided to the connection framework process 210 as part of the establish message (step 904). The establish and HiYa messages used in connection with steps 900 and 904 to establish communications between the connection framework process and the client application 422 as part of a service discovery process may be the same as the establish and HiYa messages used at steps 604 and 608 of the service registration process described in connection with Fig. 6. After a dedicated client control channel has been established, authentication and authorization steps may be performed by an exchange of authorization and authentication messages (step 909).

Provided that any required authentication and authorization is successfully completed, service discovery is initiated with a query service message sent from the client application 422 to the connection framework process (step 913). In response to the client application's 422 request for information on available services (in the form of a query service message), the connection framework process 210 returns a service list message containing a list of services that the client application 422 is authorized to receive (step 917). In accordance with embodiments of the present invention, the query service message sent by the client application 422 may specify a particular service type or class, may query for local services, for all services available to remote platforms, for all available services, or for other categories of services available in connection with the system.

If a service requested by the client application 422 is available, the client application 422 may request the service using an open service message (step 920). The connection framework process 210, upon receiving the open service message, may verify that the requested service is available, and respond with a service open message (step 924). After receiving the service open message, the client application 422 connects directly to the service engine 416. In accordance with embodiments of the present invention, communications between the client application 422 and the connection framework process 210 use the client control channel that is established using the establish and HiYa messages. Furthermore, where a client control channel is established in connection with an application 422 as part of registering services (i.e., in connection with service engine 416 functions of an application that may also consume services as a client application 422), that channel may be used to request services. Similarly, where a control channel is established between an application seeing services (i.e., as a client application 422) and the connection framework process 210, the dedicated channel established in connection with the service discovery process may be used by the application to report services when such application is operating as a service engine 416. Accordingly, once a dedicated channel is established between an application 416 and/or 422 and the connection framework process 210 in connection with a first process, there is no need to establish a separate connection for use in a second process between the application 416 and/or 422 and the connection framework process 210.

The connection framework process 210 may request the status of a managed process or client application 422 at any time using a request status message (step 928). In addition, the client application 422 may request the status of a service from the connection framework process 210 at any time (step 928). When a client application 422 receives a request status message from the connection framework process 210, the client application 422 is obliged to reply with a status report message (step 932). Similarly, where the connection framework process 210 receives a request status message from a client application 422, the connection framework process 210 must reply with a status report message to the client application 422 (step 932). In general, a status report message 932 must be sent within a specified period of time by the receiving entity after receipt of the request status message.

When the client application 422 no longer requires the service, or when the session is otherwise complete, the client application 422 notifies the connection framework process using a close service message (step 936). The connection framework process in turn notifies the service engine 416. In addition, the connection framework process 210 acknowledges closure of the service by sending a service closed message (step 940) to the client application 422.

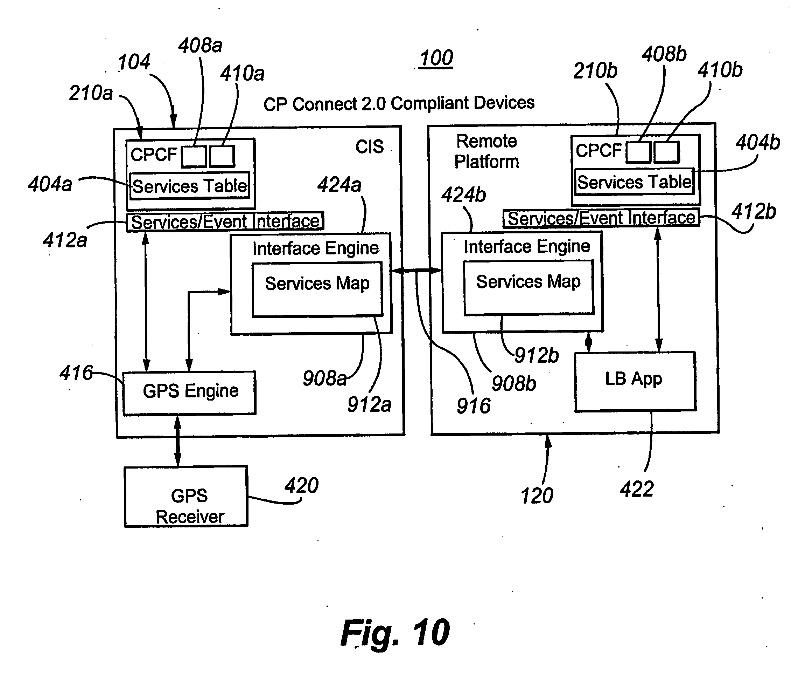

With reference now to Fig. 10, a system 100 in which a communications interface system 104 is operating in connection with a remote platform 120 is illustrated. In general, the communications interface system 104 includes a connection framework process 210. A services table 404, event table 408, and service initiation table 410 are maintained by the CIS 104. Although shown in Fig. 10 as being included in its connection framework process 210, some or all of the tables may be provided by another process or application, or by the operating system. In addition, the communications interface system 104 includes a connection runtime services/event interface 412. One or more service engines 416 may also be running on the communications interface system 104. For example, as shown in Fig. 10, a service engine 416 comprising a GPS engine may be included. A device 420 may be interconnected to the service engine 416. For example, as illustrated in Fig. 10, a GPS receiver 420 may be in communication with the GPS engine 416.

The communications interface system 104 may also include normalized communication interfaces 424. In accordance with embodiments of the present invention, a normalized communication interface 424a may comprise an interface engine or manager 908a. In one embodiment, the normalized communication interface 424a can include a link selection apparatus or module for determining a selected communications channel to be used, as described in U.S. Patent No. 6,122,514 "Communications Channel Selection," and assigned to the same assignee as this application. A services map 912a may be maintained by the interface engine 908. In general, the communications interface 424a connects the communications interface system 104 to a remote platform 120 via a communication link 916. The communication link 916 may comprise any communication interconnection suitable for transferring digital data and instructions. Accordingly, examples of communication links 916 include Bluetooth or other wireless connections (in which case the interface managers 424 comprise wireless interfaces 328) or USB or other wired connections (in which case the interface managers 424 comprise wired interfaces 324). An interface engine 908 can be initiated or started in a variety of ways, including by means of a USB driver.

The remote platform 120 generally includes a connection framework process 210b containing a services table 404b, an event table 408b and a service initiation table 410b. The remote platform 120 may additionally provide a services/event interface 412b and a normalized communications interface 424b. The normalized communications interface 424b may comprise an interface engine or manager 908b in connection with which a services map 912b is maintained. In addition, one or more applications 422 may run on the remote platform 120.

The interface engines 908 normalize external (off platform) communications. In particular, the interface engines 908 map communication technology specific addresses to network normalized service pipes. Examples of communications technologies that may be supported by interface engines 908 include TCP/UDP, USB, and simple serial ports. In addition, various bus technologies, such as CAN may be supported. Using the service pipes or communication links 916, applications 422 are able to access local and remote services in the same manner. That is, whether a service is operated in connection with a service engine 416 running on a platform that is local to the client application 422 or remote to the client application 422 is immaterial as a result of the operation of the interface engines 908. In addition, the particular communication link 916 between platforms (i.e., between a CIS 104 and a remote platform 120) is immaterial.

Where an application 422 is running on a platform 104 or 120 that is remote (i.e., separate) from the platform 104 or 120 in connection with which a service is running or available, the interface engine 908 associated with the platform 104 or 120 associated with the service serves as a proxy for the remote application 422. In addition, with respect to the advertisement of services, an interface engine 908 running on a platform 104 or 120 will advertise the services available from the remote (i.e., the other) platform In addition, an interface engine 908 monitors the interface control port appropriate for the connection technology used by the communication link 916 and processes any control messages that are received. Interface engines 908 may also provide or support the communication pipe established over the communication link 916 through which client applications and services on different platforms 104, 120 can connect to one another. In particular, the interface engines 908 operate to provide a connection that appears like a connection to a local service engine to the local application 422. Furthermore, when a remote application 422 requests a local service, the local interface engine 908 must establish a communication pipe to the local service. With communications established between the interface engine 908 and the local service engine 416, the interface engine 908 may bridge data across the communication link 916 between the local platform (e.g., a CIS 104) and the remote platform (e.g., remote platform 120). In addition, an interface engine 908 provides a bridge between the local inner process communication technology or protocol and the communication technology or protocol used by the communication link 916 between the platforms 104, 120. The bridging function provided interface engines 908 includes message framing, buffering, and flow control.

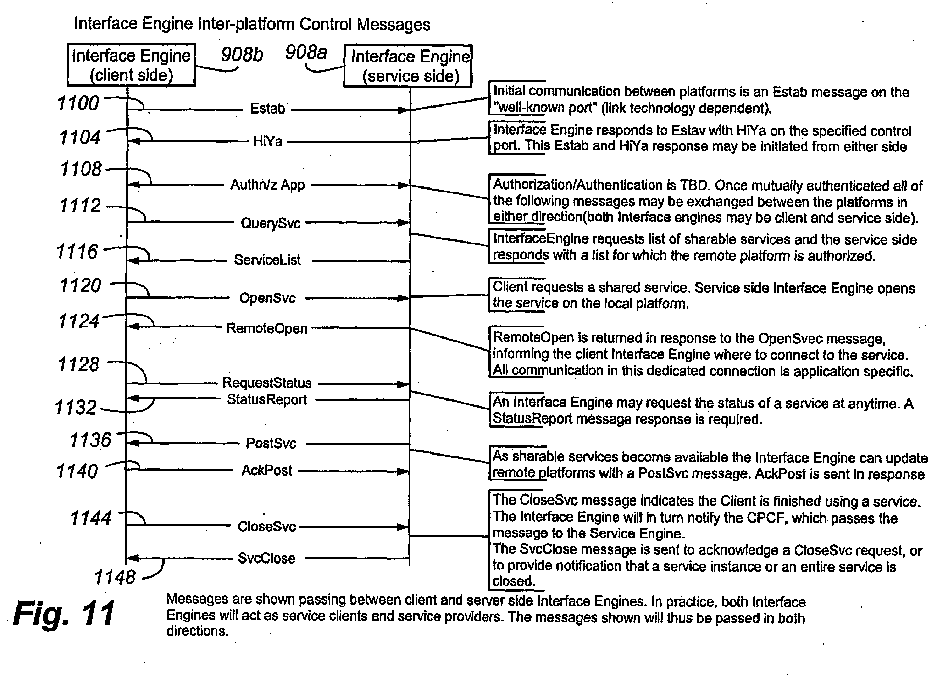

Interface engines 908 synchronize with the external platform or platforms 104 or 120 to which they connect. This synchronization may include a full exchange of information on sharable services between platforms 104, 120, or a request for a specific service. With reference now to Fig. 11, a process for synchronizing platforms 104, 120 in accordance with embodiments of the present invention is illustrated. For ease of description, the service will be assumed to be associated with a CIS 104, while the client application 422 requesting services will be assumed to be associated with a remote platform 120 interconnected to the CIS 104 by a communication link 916 (see Fig. 10).

As shown in Fig. 11, the initial communication between platforms 104, 120 is an establish message on a public channel or port (step 1100). In general, the identity of the channel or port will depend on the technology or protocol of the communication link 916. In the example process illustrated in Fig. 11, the establish message is sent by the interface engine 908b running on the remote platform 120. The interface engine 908a running on the CIS 104 receives the establish message, and responds with a HiYa message on the control port specified by the sending interface engine 908b as part of the establish message (step 1104). If the establish message was sent by the service engine 908a on the CIS 104, the interface engine 908b running on the remote platform 120 would respond with the HiYa message. Authorization and authentication messages may then be exchanged between the platforms 104, 120 (step 1108).

At step 1112, the interface engine 908b running on the remote platform 120 requests a list of sharable services. The interface engine 908a on the CIS 104 responds with a service list message, containing a list of services that the remote platform 120 is authorized to access (step 1116). In particular, functioning as a proxy for a client application 422 that may not be identified, and that may be prospective, the service side interface engine 908a obtains the list of services that can be shared with a remote platform 120 from the services table 404a established by or associated with the communication framework process 210a running on the CIS 104. The services list may be specific to a requesting application 422 associated with the remote platform 120 when such information is made available to the interface engine 908a running on the CIS 104. The interface engine 908b on the remote platform 120 may provide the services list received from the CIS 104 to the connection framework process 210b on the remote platform 120 for placement in the associated services table 404b.

When a client application 422 running on the remote platform 120 requests a shared service, the interface engine 908b running on the remote platform 120 sends an open service message to the interface engine 908a associated with the CIS 104 (step 1120). In general, the open service message identifies the requested service, and may also identify the requesting client application 422. In response to the open service message, the service side interface engine 908a opens the service on the local platform 104. In general, the interface engine on the local platform 104, acting as the proxy for the client application 422 on the remote platform 120, opens the requested service in the same manner that a client application 422 running on the local platform 104 would open the service (see, e.g., Fig. 6 and the associated description). A remote open message is returned by the local or service side interface engine 908 to inform the client or remote interface engine 908b where to connect to the requested service (step 1124). The identified port or communication channel is then used to communicate application specific messages.

An interface engine 908 may request the status of a service on another platform at any time. This is done by sending a request status message (step 1128). In connection with the example process of Fig. 11, the request status message may be sent by the client side interface engine 908b regarding the status of the services reported by the service side interface engine 908a. In reply to the request status message, the service side interface engine 908a returns a status report message (step 1132). Information contained in the status report message may be obtained by the service side interface engine 908a by sending a request status message to the service engine 416 associated with the service, the status of which has been requested.

As (or if) additional sharable services become available, an interface engine 908 can notify other platforms. For example, if additional services become available from the CIS 104, the service side interface engine 908a can send a post service message listing those services (step 1136). In reply to a post services message, a receiving interface engine 908b sends an acknowledge post message (step 1140).

When a client application 422 is finished using a service, the client side interface engine 908b sends a close service message to the service side interface engine 908a (step 1144). The service side interface engine 908a will in turn notify the connection framework process 210a using the interface engine's dedicated control channel. The connection framework process 210a then passes the message to the service engine 416. In reply to a close service message, a service side interface engine 908 sends a service closed message (step 1148). A service closed message may also be sent to provide notification that a service instance is closed (i.e., that the provision of a service with respect to a particular client application is closed) or that an entire service is closed.

Although the example provided in connection with Fig. 11 describes one interface engine 908a as a service side interface engine, and the other interface engine 908b as a client side interface engine, it should be appreciated that embodiments of the present invention are not so limited. In particular, both interface engines 908a and 908b may act as service clients and service providers. In such situations, the messages illustrated in connection with Fig. 11 will be passed in both directions.

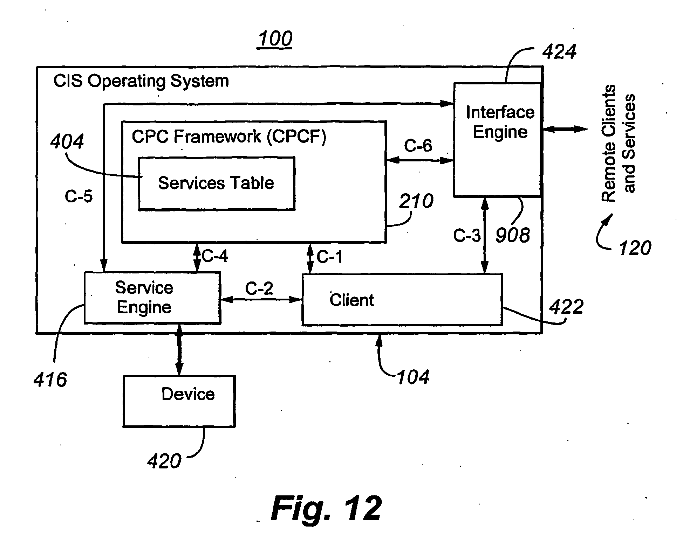

With reference now to Fig. 12, various communication channels or logical connections between components of a system 100 are illustrated. In particular, Fig. 12 summarizes various of the communications channels or pipes discussed with respect to the transmission of messages and data between different entities or components of a system 100. A client application 422 communicates with a local connection framework process 210 directly over communication channel C-1 in order to discover services available to the application 422. In particular, a client application 422 initially establishes communications with the connection framework process 210 using an establish message sent directly to the communication framework process 210 on the public control channel of the communication framework process. After a client application 422 has established communications with a local connection framework process 210, subsequent communications between those entities can use the control channel of the client application 422. In particular, messages may be passed between the client application 422 and the local connection framework process 210 directly over channel C-1 in order to discover available services and to request a service included in a service list passed to the client application 422 in response to a query service message. After the connection framework process 210 has responded to an open service message by sending a service open message directly to the client application 422 over channel C-1, the client application 422 may connect directly to the service engine 416 associated with the requested service.

Communications between a client application 422 and a service engine 416 are represented in Fig. 12 by communication channel C-2. In general, communications passed along communications channel C-2 are application specific. That is, the format of messages and data are determined by the service engine 416 or the local application 422, rather than by messages established as part of the connection framework process 210 (e.g., control messages 216). In accordance with embodiments of the present invention, the service engine 416 handles basic message and data formatting and control of the physical link between the device 420 that makes the service available and the service engine 416 interconnected to the device. Accordingly, such functions need not be handled by the client application 422. In accordance with embodiments of the present invention, the service engine 416 may handle layers 1-4 of the standard network communications stack model.

Where a client application 422 has, through the connection framework process 210, subscribed to a service available on a remote platform 120, communications channel C-3 between the client application 422 and the interface engine 908 (provided as part of a communication manager 424) may be used. In particular, channel C-3 is used after a service open message with respect to a remote service has been received by the client application 422. Like messages and data passed over the communication link C-2 between a local service engine 416 and a client application 422, the messages and data passed over communication link C-3 between the interface engine 908 and the client application 422 may be application specific. In particular, the interface engine 908 appears to the client application 422 as a local service engine 416. Furthermore, the client application 422 need not be aware of the communication link technology 916 used to interconnect the CIS 104 to the remote platform 120. In particular, the formatting of application specific messages into the appropriate protocol, and the control of the physical connection, is handled by the interface engine 908. In accordance with embodiments of the present invention, layers 1-4 of the standard network model are handled by the interface engine 908.

Service engines 416 communicate directly with the connection framework process 210 in connection with the advertisement of available services. Such communications are passed along communication channel C-4. In addition, the direct interconnection between a service engine 416 and the local connection framework process 210 can be used to carry request status and status report messages. Other messages that may be carried between the connection framework process 210 and the service engine 416 include instructions to close a service for all applications or for a particular application 422. In general, after an establish message is sent containing the identity of the control channel to be used, communications between a service engine 416 and the local connection framework process 210 use the control channel specified by the service engine 416.

A service engine 416 may also communicate directly with an interface engine 908 over communication channel C-5, for example when providing services to a client application 422 running or associated with a remote platform 120. In general, the interface engine 908 serves as a proxy for the client application 422 on the remote platform 120, allowing application specific messages and data to be passed between the service engine 416 and the interface engine 908, for delivery to the remote platform 120 and the client application 422.

The connection framework process 210 may also communicate directly with the interface engine over channel C-6. In general, communications between a connection framework process 210 and an interface engine 908 occur in connection with the advertisement of services available on the CIS 104 to a remote platform 120, and in connection with querying the remote platform 120 for services available on the remote platform.

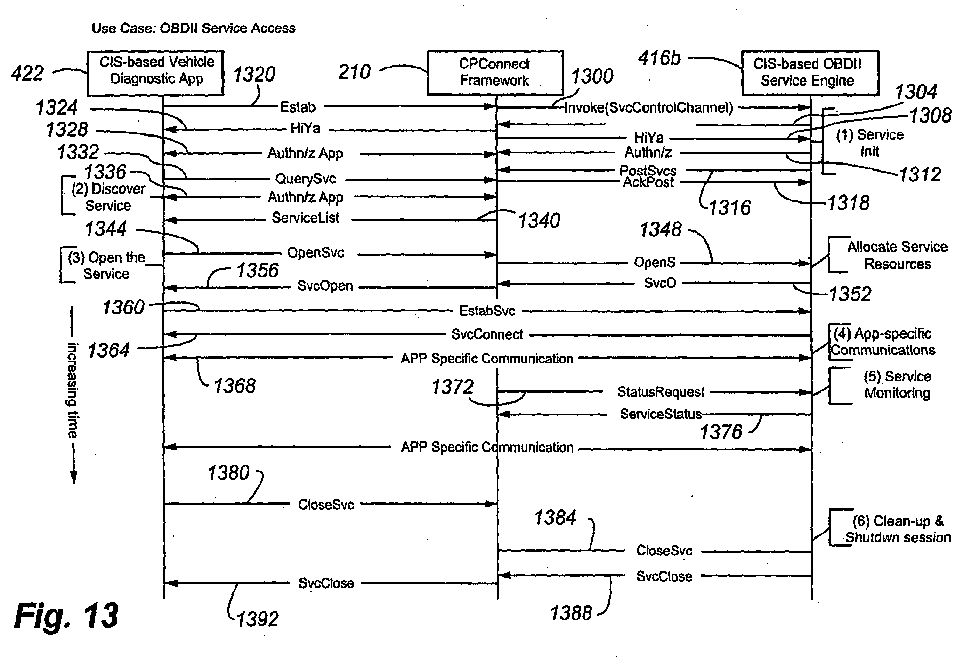

With reference now to Fig. 13, the establishment of access to a service by a client application is illustrated. According to the example illustrated by Fig. 13, the service to be accessed is an onboard diagnostics II service engine 416b running on the communications interface system 104 platform itself , and is accessed by a local application 422 comprising a vehicle diagnostic application (see Fig. 4). Initially, the connection framework process 210 sends an invoke service control channel message to the service engine 416b, which includes a command line argument specifying the name of the service control channel created for use by the service engine 416b (step 1300). In response, and with the service engine 416 running, the service engine connects to the service control channel that has been specified by the connection framework process 210, and sends an establishing message containing the identity of the service control channel for the service engine 416b (step 1304). The connection framework process 210, sends HiYa message to establish communication over the control channel and to command the service 412b to perform any service specific initialization (step 1308). The service engine 416b then initializes, verifies connectivity to the device providing the service (i.e., the onboard diagnostic system II (OBD-II) interface 420b), and authentication and authorization is performed (step 1312). The service engine 416b then sends a post services message to the connection framework process 210 to report the services that are offered by the service engine 416b (step 1316). These services (or the single service offered through the service engine) are listed in the services table 404. An acknowledge post message is sent in response to the post services message (step 1318). The acknowledge post message communicates the service identifier (service ID) assigned to the service to the service engine 416b.

The local application 422, in the present example a vehicle diagnostic application, may be invoked by a user or by another process. Upon being invoked, the local client application 422 sends an establish message to the connection framework process 210 on the public control channel (step 1320). The connection framework process 210 responds with HiYa message on the clients control channel (step 1324), and authentication and authorization is performed (step 1328). As illustrated in Fig. 13, the client application 422 may establish communications with the connection framework process 210 at about the same time that a service engine 416 is establishing communication with the connection framework process 210. Alternatively, communications between the various entities may be established at different points in time. With a dedicated service control channel now established, the local application 422 sends a query service message to the connection framework process 210 (step 1332). The query service message may include descriptors such as "service class" and "service type" to specify the requested service.

In reply to the query service message, the connection framework process 210 connects to the application's communication channel. Additional authorization and authentication service protocols may then be processed (step 1336). In particular, the connection framework process 210 may verify the identity of the application requesting access to the service, and verify that the application is authorized to access the service. Therefore, in accordance with embodiments of the present invention, authorization may be required before service queries are allowed. In addition to providing data security, such procedures may be useful in connection with implementing licensing agreements regarding device, service and/or application interoperability. In one embodiment, such security related measures can be implementing using at least portions of the systems and/or methods of U.S. Patent Application No. 10/767,548 filed January 28, 2004 and entitled "Secure Telematics," that is assigned to the assignee of this application.

After the application 422 has been authenticated and authorized, the connection framework process 210 sends a list of services as part of a service list message that are shown as being available in the services table 404 and that match the service type and class requested by the application 422 (step 1340). In accordance with embodiments of the present invention, only those services that the application has sufficient privileges to utilize will be revealed to the application 422.

The application 422 then identifies a service in the list received from the connection framework process 210 that meets the application's requirements. Typically, the list of services will contain only a single service, although a number of services may be listed if more than one service meets the criteria of the applications request. The application 422 communicates its selection to the connection framework process 210 using an open service message identifying the selected service (step 1344). Upon receiving the open service message, the connection framework process 210 looks up the service ID received from the application 422 and sends an open command message to the registered service engine (in the present example the OBD-II service engine 416b) (step 1348). Included in the message sent by the connection framework process 210 to the service engine 416b is an instance key generated by the connection framework process 210 used to identify the requesting application 422. In response to receiving the open service command, the service engine 416b performs any service specific initialization, and allocates any connection specific resources required to provide the requested service. In addition, the service engine 416b creates a service instance communication pipe to be used by the application 422 to access services. The name or identifier of this communication channel is sent to the connection framework process 210 in a service open message (step 1352). A service open message is then sent from the connection framework process 210 to the application 422, which contains the instance key assigned by the connection framework process 210 and the service communication channel name or identifier (step 1356).

The identity of the communication channel for the service engine 416b now communicated to the application 422, direct communications between the application 422 and the service engine 416b can commence. To initiate direct communications, the application 422 sends an establish service message directly to the service engine 416b (i.e., using communication channel C-2 in Fig. 12) (step 1360). The service engine 416b replies to the application 422 with a service connect message (step 1364). Alternatively, if the instance key included in the establish service message does not match or another application has connected to the service engine 416b using the same instance key, the service engine 416b may deny the connection and report an error to the connection framework process 210. Provided that the establish service and service connect messages are successfully exchanged, application specific communications between the application 422 and the service engine 416b may then commence (step 1368). In accordance with other embodiments of the present invention, control messages such as establish service and service connect messages are not required in order to begin direct communications between a service and a client application. Application specific communications may include the delivery of information from the service engine 416b to the application 422. Alternatively or in addition, the communication may comprise the exchange of information between the application 422 and the service engine 416b. For instance, in connection with the present example, the application 422 may obtain vehicle performance parameter information from the service engine 416b.

In addition or as an alternative to sending messages to an application 422 using the established communication channel, a service may provide or broadcast information as an event. The connection framework process 210, in response to receiving such an event, may then reference the event table 408 to determine which application or applications 422 should be notified of the event or should have information comprising the event delivered to them.

The connection framework process 210 may periodically request the status of the service engine 416 by sending a status requested message to the service engine 416 (step 1372). In reply, the service engine 416 sends a service status message (step 1376). The status request and service status messages are sent and received using the service engine's control channel. As illustrated in Fig. 13, status request messages may be interspersed with application specific communications.

When the application 422 no longer requires access to the service, a close service message is sent from the application 422 to the connection framework process 210 (step 1380), which in turn notifies the service engine 416 (step 1384). The service engine 416 acknowledges the request (step 1388) and cleans up any session specific resources. The service engine 416 then notifies the connection framework process 210 that the session has terminated (step 1392).

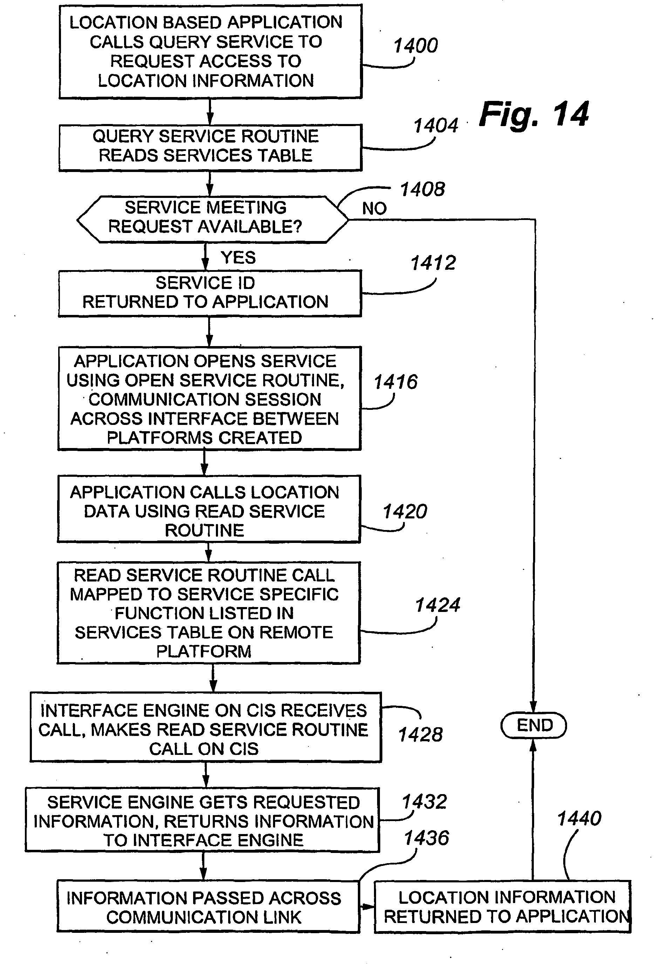

With reference now to Fig. 14, a process for allowing an application 422 running on a remote platform 120 to access a service available from a communications interface system 104 in accordance with embodiments of the present invention is illustrated. In particular, Fig. 14 illustrates a request from a location based application 422 on a remote platform 120 for access to location information available from a GPS receiver 420 associated with the communications interface system 104. Initially, at step 1400, the location based application 422 calls a query service routine to request access to location information. The query service routine reads the services table 404b (step 1404). At step 1408, a determination is made as to whether a service meeting the request is available. With respect to a service available through another platform, such as the communications interface system 104, the services table 404b will include a reference to such a service if the service was included in a service list message received by the remote platform 120. Provided that the services table 404b includes a reference to the requested service, the service will be determined to be available, and a service ID for that service will be returned from the connection framework process 210b to the application 422 (step 1412). If a service meeting the request is not available, the process may end.

At step 1416, the application 422, through the connection framework process 210, opens the service using an open service routine, and a communication session across the interface or communication link 916 between the remote platform 120 and the communications interface system 104 is created. The application 422 then calls location data using a read service routine sent directly to the service engine 416 through which the service is available (step 1420). The read service routine call is mapped to a service specific function listed in the services table 404b on the remote platform (step 1424). The service specific routine called on the remote platform 120 performs any parameter translation required to conform to the conventions or formats of the platform on which the service engine 416 is running (here the communications interface system 104). In accordance with other embodiments of the present invention, a stream data model according to which application messages are read from and written to a channel that guarantees delivery is used, instead of mapped read and write calls.

The translated parameters or data are transferred to the communications interface system 104 from the remote platform 120 via the communication routines of the normalized communications interface 424 established between the interface engines 908a and 908b. That is, the interface engines 908 perform the steps required to implement the transmission of the service routine message between the communications interface system 104 and the remote platform 120 using the communications link 916. For example, the interface engines 908 can perform the functions associated with the lower four layers (i.e., the physical through the transport layers) associated with the particular communication, link 916 between the interface engines 908. As can be appreciated by one of skill in the art, the particular requirements for such communication are determined by the particular communication link 916. Examples of communication links 916 that may be used to interconnect a communications interface system to a remote platform 120 include USB, Ethernet, and Bluetooth interconnections. In general, any type of wired or wireless interface may be used to establish the connection. Furthermore, as can be appreciated from the description provided herein, by providing suitable interface engines 908, and by appropriately mapping references to resources, a communications interface system 104 and interconnected remote platform 120 are not otherwise required to conform to the particular requirements of the link 916 between the platforms.

At step 1428, the interface engine 908a running on the communications interface system 104 receives the call for location data, and makes a service specific read service routine call to the service engine 416. The service engine 416 then gets the requested location information, and returns it to the interface engine 908a (step 1432). Accordingly, it can be appreciated that, by providing an interface engine 908a running on the communications interface system, the request for information and the response to that request are handled as if the application requesting such information (in the present example the location based application 422) were running on the communications interface system 104 directly.

The interface engine 908a performs any necessary network or host data format translation of the returned information, and generates a results message containing the requested information. The results message is then passed across the communications link 916, and the interface engine 908b running on the remote platform 120 breaks down the network messages and performs any required translation on the results received (step 1436). The requested location information included in the results received is then returned to the requesting application 422 (step 1440). The process may then end.

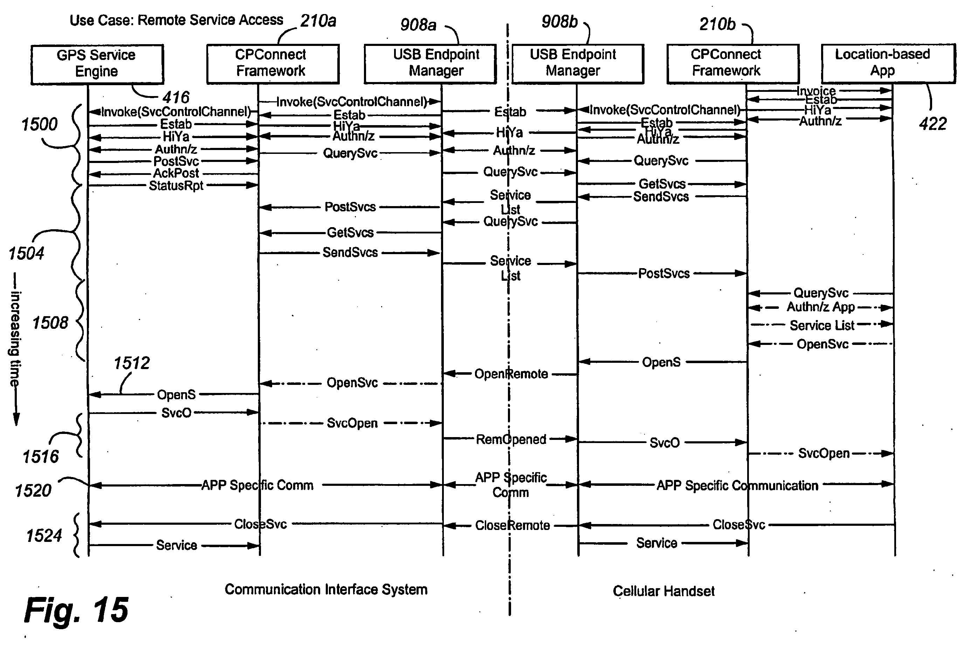

With reference now to Fig. 15, a remote service access process scenario is illustrated. In particular, the exchange of messages according to an example in which information from a service running on a communications interface system 104 is passed to an application 422 requesting such information and running on a remote platform 120 is illustrated. More particularly, the present example involves a service engine 416 comprising a GPS service engine 416 passing information to an application comprising a location based application 422 running on a remote platform 120 comprising a cellular handset. Furthermore, in the example of Fig. 15, the communication link 916 between the interface engines 908a and 908b comprises a universal serial bus (USB) communications link.

In general, before the exchange of services can be performed, the services on each platform must be readied through service initiation messages (step 1500) performed on each of the platforms 104 and 120. An exchange of shared services information can then be made by the communications interface system 104 and the remote platform 120 through an exchange of services messages (step 1504). After each platform receives a list of services from the other, the services available on the remote platform are posted in their respective services tables 404.

In the example shown, the location based application 422 then queries for available services, and opens a service meeting the application's requirements (step 1508). The open service message is then transported across the USB communication link, and is eventually received by the service engine 416 (step 1512). The service engine 416 responds with a service open message that is transported across the communication link and eventually delivered to the location based application 422 (step 1516). After the service open message has been received by the location based application 422, application specific communications can begin (step 1520). The application specific communications can include transfer of information, such as GPS data, from the service engine 416 to the location based application 422. Importantly, these communications occur independently, or without further involvement, of the connection framework process 210 of the communications interface system 104. That is, after the communications link is established between the client application 422 and the endpoint manager 908b, and between the service engine 416 and the endpoint manager 908a, the functionalities of the connection framework process 210 are no longer required to have the information transfer or other communications between the service engine 416 and the location based application 422. Also, direct communications occur between the interface engines 908a, 908b. Essentially, these communications, such as information transfers, take place after the communications link is established, as if the connection framework process 210 was not present. When the application 422 no longer requires the location based information, the service is closed, and cleanup is performed (step 1524). Although the present description related to example communication operations after the communications link is established concern a location based application 422 that is executing on a remote platform 120, the independent nature of the communications that occur after the communications link is established are not limited to a remote platform environment. In particular, the same direct connection (i.e., not through a connection framework process) between an application 422 and a service engine 416 exists when the application being executed is not remote from the connection framework process 210, such as an application local to the communications interface system 104. In such a case, like the example just described, the application has direct communications with the service engine or other services independently and without involvement of the connection framework process 210.

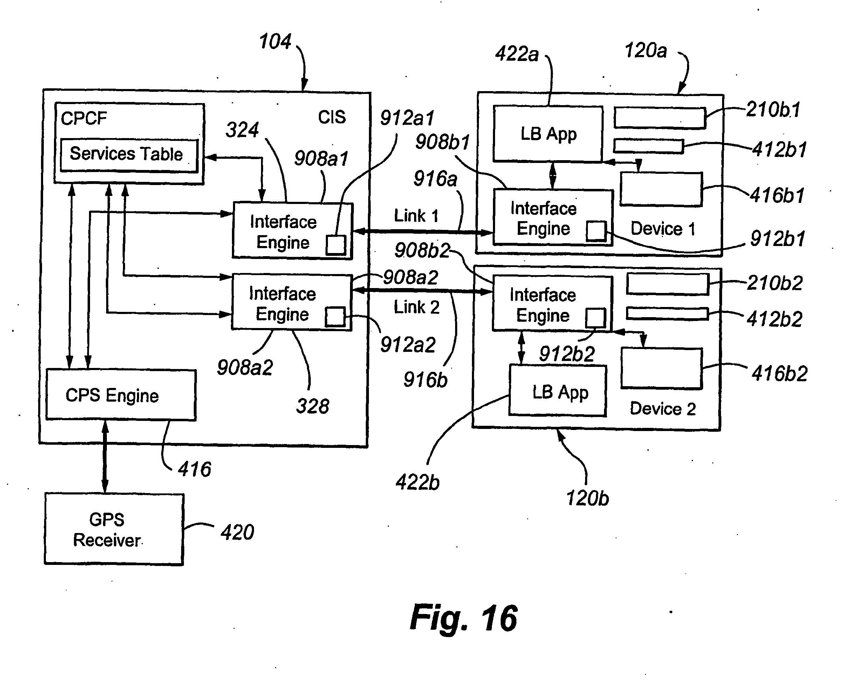

With reference now to Fig. 16, a block diagram of a communications interface system 104 interconnected to multiple remote devices 120a and 120b is illustrated. In the example of Fig. 16, the communications interface system includes first 908a1 and second 908a2 interface engines, each having an associated services map 912a1 and 912a2. Accordingly, the first 916a and second 916b communication links to the first 120a and second 120b remote devices respectively may use different communication link technologies. For example, the first interface engine 908a1 could comprise a wired interface 324, and the second interface engine 912a2 could comprise a wireless interface 328. As also shown, the communications interface system may continue to provide service engines 416b1 and 416b2, which may or may not operate in cooperation with devices 420 directly interconnected to the communications interface system 104.

Each of the remote platforms 120 generally provides an interface engine 908b1 and 908b2 and an associated services map 912b1 and 912b2. Also, because they function as full remote platforms 120, they each include a connection framework process 210b1 and 210b2. The connection framework processes 210b on the remote platforms 120 each include a services table 404, event table 408 and service initiation table 410 (not shown in Fig. 16). In addition, each remote platform includes a service event interface 412b1 and 412b2. The remote platforms 120 may also support client applications 416b1 and 416b2.

In general, the operation of a system in which a communications interface system 104 is interconnected to multiple remote platforms 120 is the same as for the case in which a single remote platform 120 is used. In particular, multiple remote platforms 120 can be accommodated by providing an appropriate interface engine 908 to support the communication link 916 used by each remote platform 120. Furthermore, it should be appreciated that, where the communication links 916 used by multiple remote platforms 120 are the same, and where such link can support multiple platforms, a single interface engine 908a may support multiple remote platforms 120.

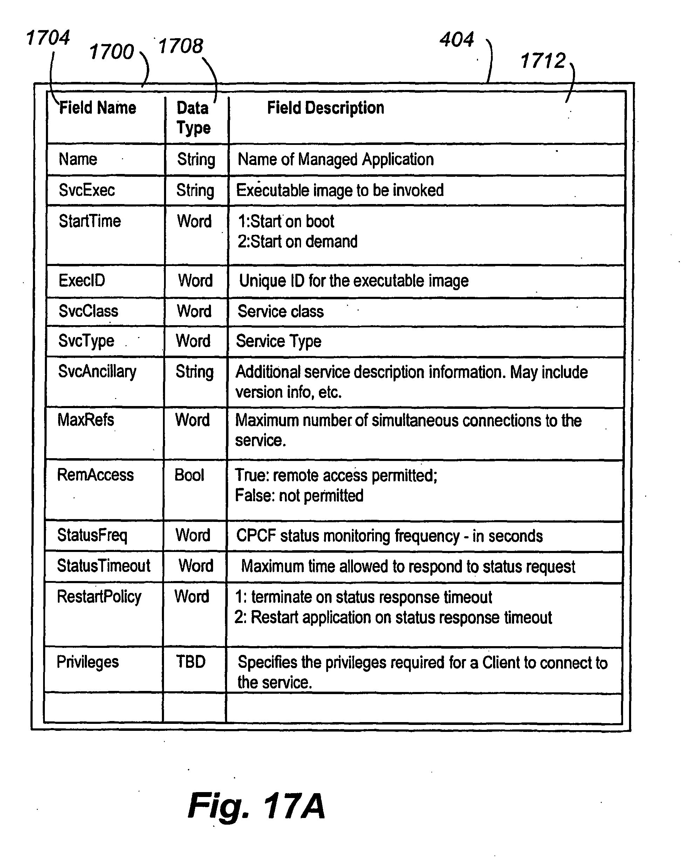

The services table 404 maintained by a connection framework process 210 in accordance with embodiments of the present invention contains records related to services available, either through a communications interface system 104 or through an interconnected remote platform 120. In connection with maintaining such information, the services table 404 associated with a communications interface system 104 or a remote platform 120 may include a static service table record 1700 (see Fig. 17A) for each service available to the communication interface system 104a or remote platform 120. Each record 1700 may provide a number of fields, identified by a field name 1704. A record 1700 may also include information corresponding to each field name 1704, such as the data type 1708 and the field description 1712. For example, a name field may specify the name of the managed application and a service executable field may specify the executable image to be invoked. A start time field may be provided specifying whether the application is to be started on boot or on demand. An executable ID field specifies a unique ID for the executable image. Service class and service type fields are also provided to further categorize the available service and an ancillary field may be provided for further service description information. A maximum references field specifies the maximum number of simultaneous connections to the service. A remote access field specifies whether access from an application on a remote platform is permitted or not. A status frequency field may be provided for specifying the status of connection framework process monitoring, and a status timeout field specifies the maximum time allowed to respond to a status request. A restart policy field specifies the action taken in response to a timeout. For example, an application may terminate on status response timeout, or the application may restart. A privileges field may be provided to specify the privileges required for a client to connect to the service.

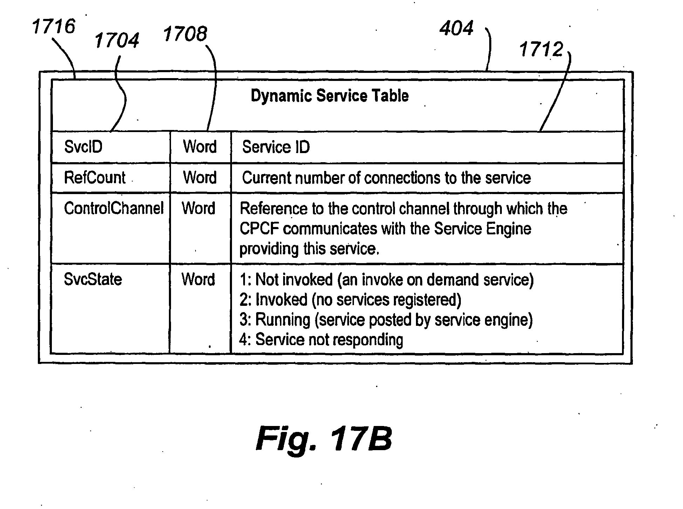

With reference now to Fig. 17B, fields that may be provided as part of a dynamic service table record 1716 maintained as part of the services table 404 are illustrated. Examples of such fields that may be maintained as part of a dynamic service table record 1716 include a service ID assigned to the service. A field containing the current number of connections to the service may also be provided. In addition, the control channel through which the connection framework process 210 communicates with the service engine 416 providing the service may be provided. A service state field may be included as part of the dynamic service table record 1716 to indicate whether a service is not invoked, invoked, running or not responding. Accordingly, it can be appreciated that a record included in a dynamic service table record contains fields for information regarding a service that change during the normal operation of a system 100. Furthermore, it can be appreciated that the static service table records 1700 contain information that is infrequently changed, and that provides a starting point for the operation of applications and services. As can be appreciated by one of skill in the art from the description provided herein, a static service table record 1700 may be stored in non-volatile memory, while a dynamic service table record 1716 may be stored in volatile memory. Furthermore, the static and dynamic records may be maintained as a single combined record.

Examples of fields that may be included in a dynamic service table record 1716 include a service ID field to specify the service identifier of the service to which the record 1716 pertains. A service class field may specify the class to which the particular service belongs, while a service type field specifies the service type. A reference count field may be provided to indicate the number of connections (e.g., from separate applications 422) that are currently connected to the service. A maximum references field may be provided to indicate the maximum number of simultaneous connections to the service that can be maintained at any one time. A field may also be provided for indicating whether remote access to the service is permitted. In order to identify the control channel that can be used by the connection framework process 210 to communicate with the service engine providing the service, a control type field may be provided. As an additional example, a service state field may be provided to indicate the current service state of the service. Appropriate values for the fields may be specified by the data type 1708 associated with each field. For example, data types 1708 can be data words or Boolean strings.

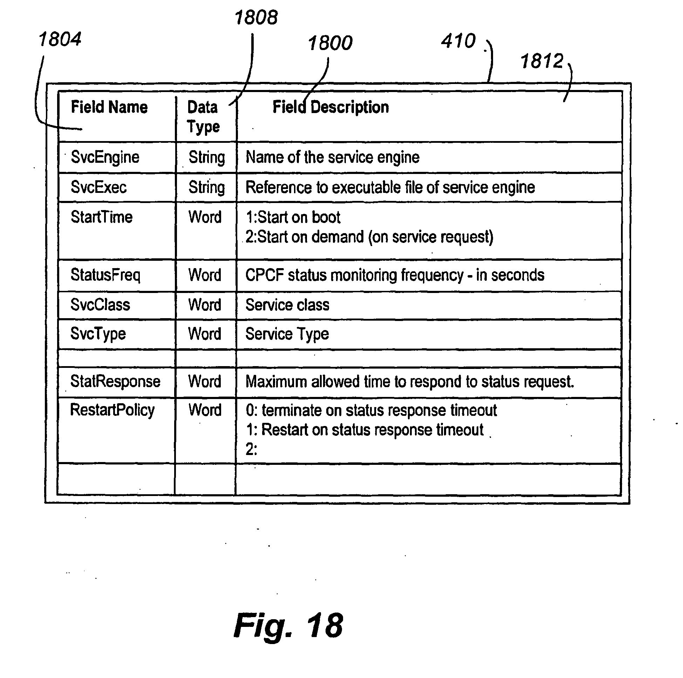

The service initiation table 410 contains information regarding service engines that are local to the platform (i.e., the communications interface system 104 or the remote platform 120 on which the service initiation table 410 under consideration is established). In general, each service initiation table 410 may contain a record for each service engine on the platform 104 or 120. With reference now to Fig. 18, an example record 1800 in a service initiation table 410 is depicted. Each record 1800 may include a number of fields identified by a field name 1804, data type 1808, and a field description 1812. Individual fields may include a service engine field identifying the service engine to which the record 1800 pertains by name, and a service executable field that provides a reference to the executable file of the service engine. A start time field may be provided for indicating whether the executable is to be started on boot up or on demand (i.e., in response to a service request). A status frequency field may be provided to indicate the frequency with which the communication framework process 210 is to monitor the status of the service. Fields for specifying the service class and service type may also be included. In addition, a status response field indicating the maximum time that the service is allowed to respond to a status request may be provided. As an additional example, a restart policy field indicating the action to be taken if the service fails to respond to a status request within the maximum specified time may be indicated.

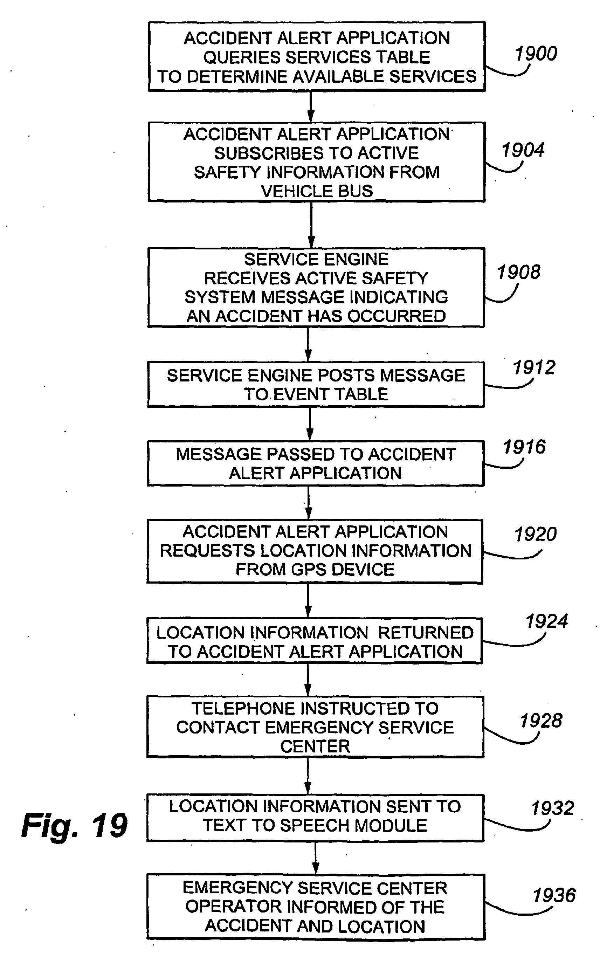

With reference now to Fig. 19, an example scenario involving the use of a communications interface system 104 in accordance with an embodiment of the present invention in facilitating the exchange of information between various devices is illustrated. Initially, at step 1900, an accident alert application 422 running on the communications interface system 104 queries the services table 404 to determine available services. At step 1904, the accident alert application 422 subscribes to active safety information available from the vehicle bus through an OBD-II vehicle accident service engine 416. In particular, the vehicle accident detector service engine 416 may operate in conjunction with a port, for example provided as part of a daughter card, that provides a physical interconnection to the vehicle bus at an OBD-II interface 420. In addition, the accident alert application 422 subscribes to communications services available from a cellular telephone 124. As can be appreciated from the description provided herein, the cellular telephone 124 may comprise a remote platform 120 interconnected to the communications interface system 104 through a normalized communication interface 424. Alternatively, the cellular telephone 124 may be interconnected to the communications interface system 104 through a service engine 416, for example where the cellular telephone 124 is interconnected through a specially provided adaptor or port.

At step 1908, the vehicle accident detector service engine 416 receives an accident indication from the vehicle bus. Such accident indication may be in the form of, for example, an active safety system indication that an airbag has been ignited. At step 1912, the vehicle accident detector service engine 416 posts the message to the event table 408 maintained by the connection framework process 210. As a registered subscriber for accident messages, the accident message posted by the vehicle accident detector service engine 416 is passed to the accident alert application 422 (step 1916).

At step 1920, the accident alert application requests location information from the GPS device 420 that is interconnected to the communications interface system 104 through a Bluetooth wireless interface at a GPS service engine 416. The request is formatted as required by the GPS service engine 416 and passed to the GPS service engine 416. At step 1924, the requested information is returned to the accident alert application.

At step 1928, the accident alert application 422 instructs the telephone 124 interconnected to the communications interface system 104 to dial an emergency service center. The accident alert application 422 sends the location information to a text to speech module (step 1932), and the location of the vehicle is passed to an emergency service center operator verbally (step 1936).

From the example scenario presented in connection with Fig. 19, it can be appreciated that embodiments of the present invention may aggregate available services using a number of different communication links to provide enhanced user services. Furthermore, apart from sending and receiving messages required to advertise and subscribe to services and events, applications and services do not need to be specially adapted to interoperate through or in connection with the communications interface system. Furthermore, it can be appreciated that devices can communicate with one another through the communications interface system 104 using their native communication capabilities. In particular, by providing a number of different communication interfaces by which devices or remote platforms may communicate with the communications interface system 104, such as wired interfaces 324 or wireless interfaces 328, a number of different communication link technologies can be supported.

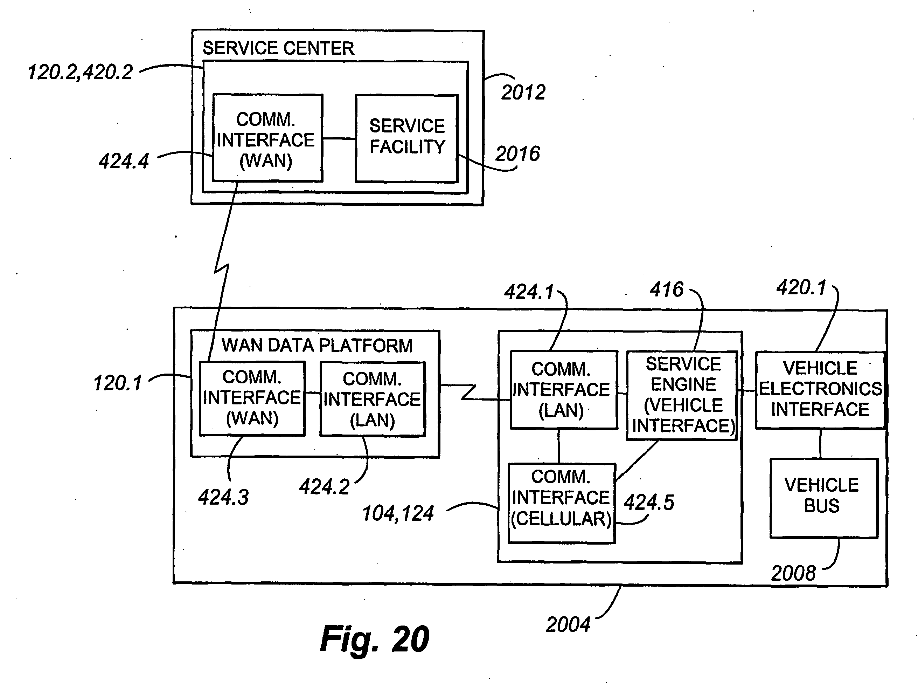

With reference now to Fig. 20, the use of a communications interface system 104 in an exemplary scenario according to which operating parameters associated with the vehicle are provided to a remote service center for diagnostic purposes is illustrated. In particular, a communication interface system 104 located within a vehicle 2004 is interconnected to the vehicle bus 2008 through a device 420.1 comprising a vehicle electronics interface, such as an OBD-II interface. A service engine 416 provided as part of the communications interface system 104 is provided for the vehicle electronics interface 420.1.

Data obtained from the vehicle bus 2008 may be provided by the service engine 420.1 to a communications interface 420.1 comprising a local area network (LAN interface), and passed by the LAN interface 424.1 to a remote platform 120.1. The remote platform 120.1 may comprise a wide area network data platform. The remote platform 120.1 includes a communications interface 424.2 that is complementary to the LAN interface 424.1. From the LAN interface 424.2 on the WAN data platform 120.1, the data that was obtained from the vehicle bus 2008 may be passed to a communications interface 424.3 comprising a wide area network interface (WAN interface), also on the WAN data platform 120.1.

The WAN interface 424.3 may then transmit the data to a complementary communication interface 424.4 associated with a service center 2012. Furthermore, the communications interface 424.4 or WAN interface associated with the service center 2012 may be provided as part of a remote platform 120.2 (i.e., a connection framework process 210 enabled platform). Alternatively, the communications interface 424.4 associated with the service center 2012 may comprise a device 420.2, in which case the WAN interface 424.3 of the WAN data platform 120.1 in the vehicle 2004 is in communication with that platform's local area network communication interface 424.2 through a service engine 416 (not shown in Fig. 20). From the wide area network interface 424 associated with the service center 2012, the data obtained from the vehicle bus 2008 is provided to a service facility 2016. The service facility may be part of a device 420.2 incorporting the WAN interface 424.4, or may interconnect to a remote platform 120.2 as a separate device 420.

The communications interface system 104 may comprise a connection framework process 210 enabled cellular telephone 124, in which case the communications interface system 104 may include a cellular telephone communications interface 424.5. As can be appreciated by one of skill in the art from the description provided herein, such a cellular communication interface 424.5 may provide an alternate means for delivering data from the vehicle bus 2008 to a service center 2012.

Various communication link technologies may be associated with the described communication interfaces 424 in connection with Fig. 20. For instance, in addition to a cellular communication interface 424.5, a communications interface system 104 may include a local area network communication interface 424.1 comprising a wireless local area network, such as a WiFi interface. In general, the local area network interface 424.2 associated with the remote platform 120.1 supports the communication link technology applied by the local area network interface 424.1 of the communications interface system 104. Accordingly, continuing the present example, the local area network interface 424.2 of the remote platform 120.1 may comprise a wireless local area network, such as WiFi. Examples of communication link technologies used by a wide area network interface 424.3 provided as part of a remote platform 120.1 include WiMax or WiMobile. The wide area network interface 424.4 associated with the service center 2012 may then support the communication link technology of the wide area network interface 424.4 of the remote platform 120.1.

As can be appreciated by one of skill in the art, various components, such as connection framework processes 210 or service engines 416 that may be associated with communications interface systems 104 or remote platforms 120 have been omitted from Fig. 20 for clarity of the associated description. However, such components may be included, as described elsewhere herein. In addition, it should be appreciated that communications between a service center 2012 and a vehicle bus 2008 may be bidirectional. For example, in response to data regarding vehicle parameters provided to the service center 2012, the service center 2012 may issue instructions that result in a modification of the operation of the vehicle 2004.

From the description provided herein, it can also be appreciated that a communications interface system 104 may function as a hub enabling the interoperation of, including the exchange of data between, different devices and/or applications. Furthermore, when used in connection with one or more remote platforms, a number of such hubs may be interconnected.

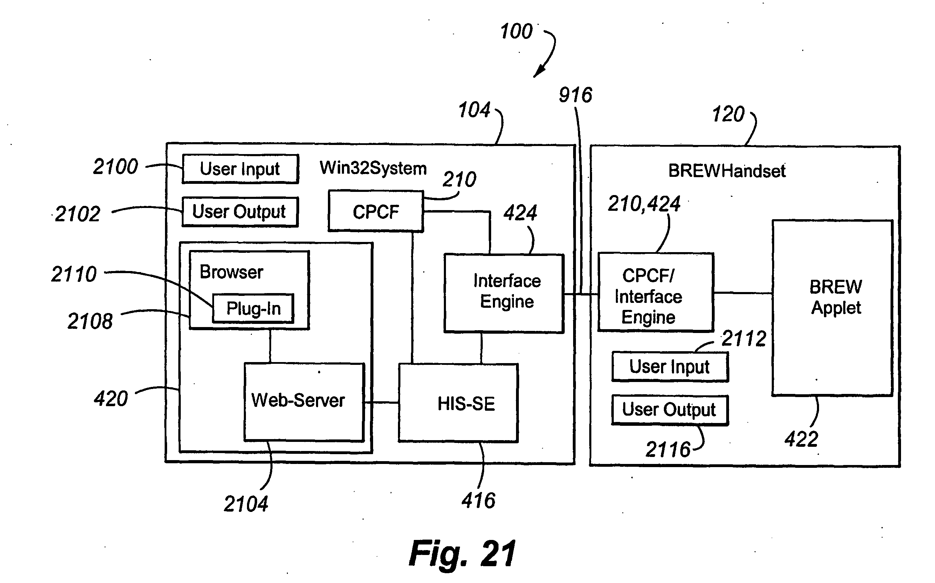

With reference now to Fig. 21, components of a communication system 100 in accordance with embodiments of the present invention are depicted. More particularly, a communications interface system 104 is shown interconnected to a remote platform 120. The communications interface system 104 depicted in Fig. 21 comprises a service platform having capabilities that may exceed or complement those of the remote platform 120, at least in one or more aspects. For example, the communications interface system 104 may comprise a Win 32 based computing system in communication with a remote platform 120 comprising a cellular telephone handset. Service facilities available in connection with a communications interface system 104 functioning as a service platform may include various user input 2100 and user output 2102 devices. Examples of user input devices 2100 include pointing devices, keyboards, keypads, microphones and touch screens. Examples of user output devices 2102 include video displays, including visual displays incorporating touch screen input 2100, and speakers.

The communications interface system 104 generally includes a connection framework process 210, which may provide a services table, event table and service initiation table. In addition, the connection framework process 210 may provide a communications process runtime service/event interface.

The communications interface system 104 also generally includes a service engine 416. The service engine 416 enables an application on the remote platform 120 to discover and utilize service facilities on the communication system interface 104 using a standardized set of commands. Furthermore, the service engine 416 may enable bidirectional communications between a service 420 running on the communications interface system 104 and an application 422 running on the remote platform 120. The service engine 416 is therefore in communication with a service 420 running on or available through the communications interface system 104. As an example, the service 420 may comprise a web server 2104 in combination with a browser application 2108. A plug-in 2110 may be associated with the browser 2108 for facilitating or enabling certain functions described herein that are not otherwise provided by a general purpose browser 2108. A service 420 may itself comprise a service facility. A service 420 may also operate in combination with one or more user input 2100, user output 2102, or other communications interface system 104 capabilities or devices to provide a server service facility that can be used by an application 422 running on a remote platform. For example, a service 420 comprising a browser and user output 2102 can comprise a service facility that can be used by an application 422 on a remote platform 120 to display content. Collectively, the service engine 416 and the service 420 comprise a resource or service that is available to applications or platforms, including applications 422 on a remote platform 120. In the example of Fig. 21, the resource comprises a display service that operates in combination with a user output 2102 that comprises a display. However, embodiments of the present invention are not so limited. For example, a service may comprise an audio output, audio input, manual input, processing or other service that is more capable than or at least complements capabilities of a remote platform 120.

A normalized communication interface or interface engine 424 is also provided. The interface engine 424 is generally in communication with the connection framework process 210 and the service engine 416 on the communications interface system 104. In addition, the interface engine 424 facilitates access to services 420 on the communications interface system 104 by a remote platform or platforms 120.

The remote platform 120 generally includes a connection framework process 210 and an interface engine 424 (shown combined in Fig. 21). As described elsewhere herein, the connection framework process 210 and interface engine 424 generally function to facilitate and enable communications between entities, such as applications 422, associated with or running on the remote platform 120, and devices or entities associated with or running on a communications interface system 104.

The remote platform 120 may also include a user input 2112 and a user output 2116. For example, in connection with a remote platform 120 comprising a mobile telephone, the user input 2112 may include a keypad, soft keys, and a microphone. Furthermore, a user input 2112 comprising a microphone may be used in connection with voice activated command features. Examples of user output devices 2116 include a visual display, such as a liquid crystal display (LCD), a speaker, a ringer and indicator lamps.

The remote platform 120 also generally includes an application or applet 422. For example, the application or applet 422 may comprise a function native to the remote platform 120, or applications that a user can selectively run on or in association with a remote platform 120. Furthermore, an application 422 may include functionality that provides content comprising a user interface. Such content may comprise visual and/or audio content. For instance, the application 422 may generate or otherwise provide visual content for display. Accordingly, the remote platform may provide a client service facility that comprises an application 422 capable of displaying content using a user output device 2116 comprising a visual display. As can be appreciated by one of skill in the art, where the remote platform 120 comprises a portable device with a relatively small visual display 2116, such as a cellular telephone, it may be desirable to access enhanced display capabilities in the area of the remote platform 120. Although much of the following discussion concerns an example in which visual display capabilities of a communications interface system 104 are used to display content provided by an application 420 on a remote platform 120 comprising a mobile device such as a mobile or portable telephone, it should be appreciated that other service facilities may be provided by a communications interface system 104 functioning as a service platform, and that other types of content may be provided by an application 422. For example, audio content may be provided in connection with a remote platform. In addition, a remote platform 120 is not limited to a mobile or portable telephone. For example, portable music players, hand held computers, personal digital assistants, portable storage devices, portable GPS receivers or any other device may comprise a remote platform 120.

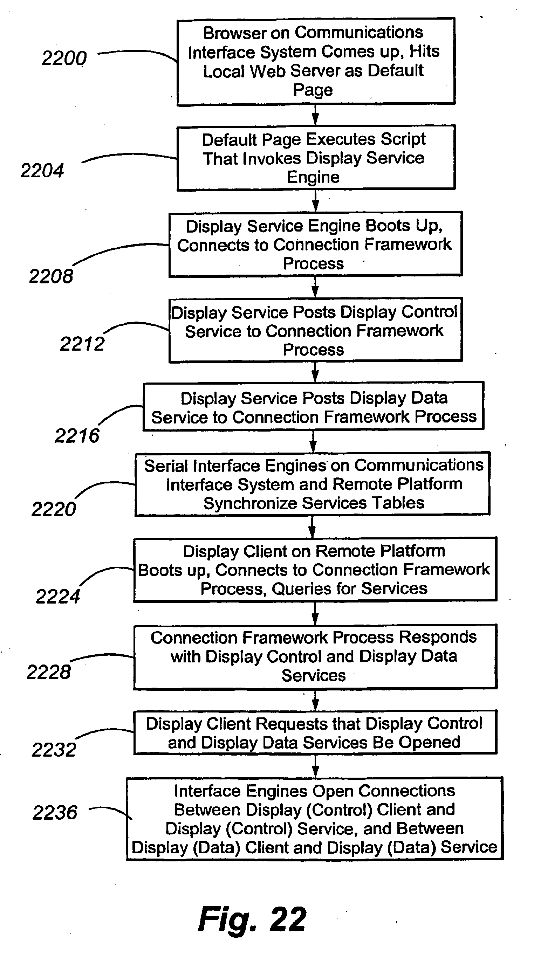

With reference now to Fig. 22, aspects of a process for service discovery by a remote platform 120 in accordance with embodiments of the present invention are depicted. Initially, at step 2200, the browser 2108 on the communications interface system 104 comes up and hits the local web server 2104 as the default page. In accordance with alternate embodiments of the present invention, the browser 2108 and web server 2104 may be combined into a service 420 comprising a single or integrated display server. Such a display server 420 may provide security features and content access controls, for example to control access of portable devices to display services and to control content overlays. Furthermore, an integrated display server 420 may be more compact than combinations of a general purpose browser 2108 and a web server 2104. In accordance with still other embodiments of the present invention, a browser 2108 and web server 2104 combination can be associated with a plug-in 2110 or may otherwise incorporate programming code to enable desired security features, content overlays and other enhancements to facilitate use with a particular type or class of application 422.

After the default page has been brought up, it executes a script that invokes the display service engine 416 (step 2204). In accordance with embodiments of the present invention, the display service engine 416 comprises a human interface system service program or engine (HIS-SE). Upon being invoked, the display service engine 416 boots up and connects to the connection framework process 210 running on the service platform comprising the communications interface system 104 (step 2208). At step 2212, the display service engine 416 posts the availability of a display controls service to the connection framework process 210. In addition, the display service engine 416 posts a display data service to the connection framework process 210 (step 2216). The display control service and the display data service may be implemented as different logical threads of the display service engine 416. In particular, the display control service may operate to handle application specific control messages, while the display data service may, in accordance with embodiments of the present invention, operate to handle application specific raw HTML content. Such content may also include data and/or executable code. Furthermore, although certain examples have discussed the use of a mark-up language comprising HTML, it should be appreciated that embodiments of the present invention are not limited to any particular type of mark-up language. Accordingly, examples of other mark-up languages that may be used in connection with embodiments of the present invention include XML, XHTML, SGML, and others.

Posting the availability of display services can include posting information related to display attributes and capabilities available through the communications interface system 104. For example, attributes such as color support, dimensions, resolution or other attributes can be advertised. In addition, the advertisement of services can include notification of any credentials that are required or fees that must be paid in order to access the advertised services.

Interface engines 424 on the communications interface system 104 and the remote platform 120 act to synchronize services tables on the platforms 104, 120 (step 2220). In accordance with the present example, the interface engines 424 comprise serial interface engines because a serial communications link, such as an RS-232 or universal serial bus (USB) link, is used to interconnect the service platform or communications interface system 104 to the remote platform 120. However, as can be appreciated by one of skill in the art after consideration of the disclosure provided herein, other types of communication links and interface engines 424 may be used.

At step 2224, the display client or application 422 on the remote platform 120 boots up, connects to the connection framework process 424 running on the remote platform 120, and queries for services. The connection framework process 424 responds with the display control and display data services that were advertised by the service engine 416 (step 2228). The display client 422 may comprise two logical threads: a display control client for handling control messages; and a display data client for sending raw HTML data to the display service engine. A display client 422, in response to being notified of the available display control and display data services, may then request that the display control and display data services be opened (step 2232). In accordance with embodiments of the present invention, prior to requesting that the display control and display data services be opened, the display client 422 may evaluate the suitability of the display. In addition, availability of the display may be advertised to a user of the portable device comprising the remote platform 120. Furthermore, authorization from the user may be required before opening a service where payment is required.

In response to the display client's 422 request, the interface engines 424 opens connections between the display control client and the display control service, and between the display data client and the display data service (step 2236). That is, separate control communications and data communications pipelines or communication paths are opened between the logical threads of the display service engine 416 and the display client 422. Furthermore, communications between the display service engine 416 and the client 422 may be intermittent, even while presenting substantially continuous content to a user.

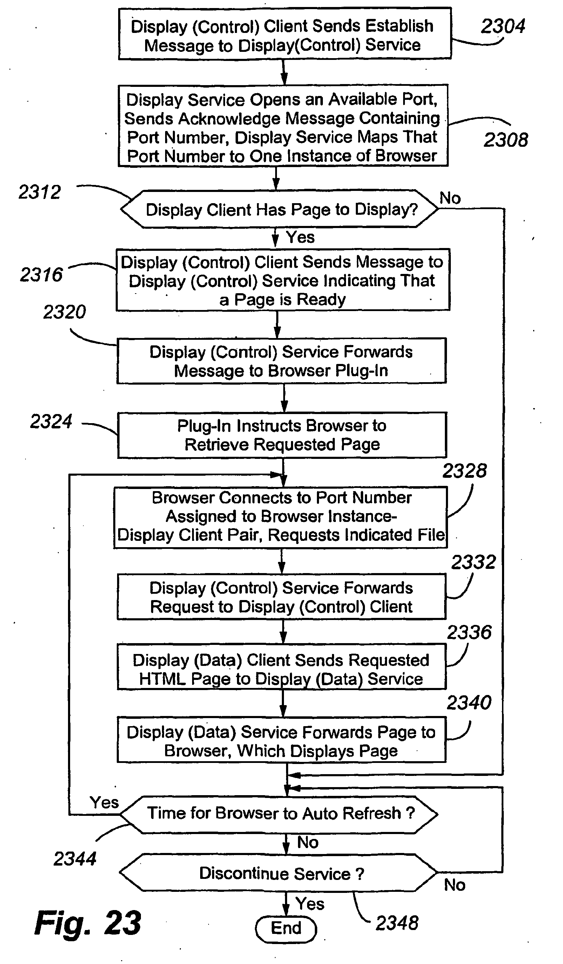

With reference now to Fig. 23, aspects of the operation of a system 100 comprising a communications interface system 104 providing display services and a remote platform 120 comprising a portable device such as a telephone are illustrated. In particular, aspects of the exchange of content and commands between the platforms 104, 120 using communications channels, for example established using steps illustrated in connection with Fig. 22, are illustrated. The display control client thread of the display client or application 422 sends an establish message to the display control service thread of the service engine 416 (step 2304). In response, the display service 416 opens an available port, sends an acknowledge message containing the port number back to the application 422, and maps that port number to one instance of the browser 2108 (step 2308).

At step 2312, a determination is made as to whether the display client 422 has a page to display. If the display client 422 has a page to display using the display service 420 of the communications interface system 104, the display control client sends a message to the display control service thread of the service engine 416 indicating that a page is ready (step 2316). The display control service then forwards the message to a plug-in 2110 associated with the browser 2108 (step 2320). The plug-in 2110 operates to instruct the browser 2108 to retrieve the requested page (step 2324).

The browser 2108 connects to the port number assigned to that browser 2108 instance - display client 422 pair and requests the indicated file (step 2328). The display control service thread of the service engine 416 forwards the request to the display control client thread of the display client application 422 (step 2332).

The display data client thread of the display client application 422 sends the requested HTML page to the display data service thread of the service engine 416 (step 2336). The display data service of the service engine 416 then forwards the page to the browser 2108, which displays the page, for example on a user output device 2102 comprising a video output that is associated with the communications interface system 104 (step 2340).

At step 2344, a determination is made as to whether it is time for the browser 2108 to auto-refresh. As can be appreciated by one of skill in the art, the browser 2108 may be assigned an auto-refresh rate as part of receiving the initial page from the web server 2104. In accordance with other embodiments of the present invention, for example those that use a service 420 comprising an integrated display server, the display service 420 can be instructed to perform a refresh request when instructed by another entity, such as the display client application 422. If it is determined that the browser 2108 should perform an auto-refresh, the process may return to step 2328 to obtain the latest instance of the indicated file. If it is not time for the browser 2108 to auto-refresh, a determination may be made as to whether the display service 420 has been discontinued (step 2348). If the service 420 has not been discontinued, the process may return to step 2344 to wait for the next auto-refresh cycle. If the service 420 is discontinued, the process may end.

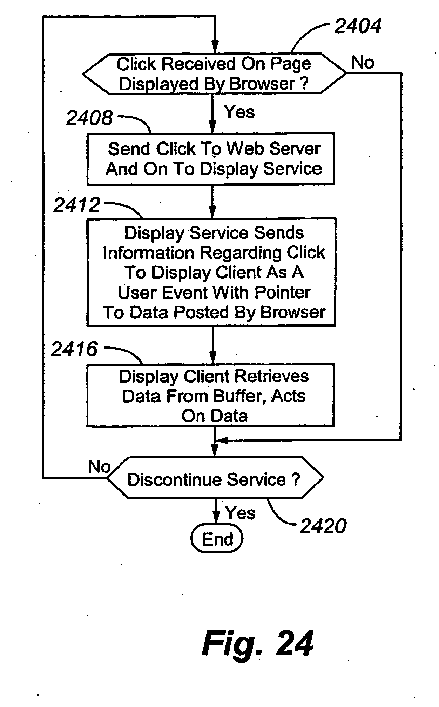

With reference now to Fig. 24, further aspects of the operation of a system 100 comprising a communications interface system 104 operating as a display server and a remote platform 120 comprising a portable device and running a display client application 422 are illustrated. In particular, the transmission of events from the communications interface system 104 to the remote platform 120 in accordance with embodiments of the present invention are illustrated. Initially, at step 2404, a determination is made as to whether a click has been received on the page displayed by the browser 2108. That is, it may be determined whether a user has made an input through interaction with a user input device 2100 provided by the communications interface system 104. For example, a user may provide input through a touch screen display, a pointing device operated in connection with a display, a keyboard, or other user input device 2100 associated with the communications interface system 104.

If it is determined that input such as a click or selection of a displayed item has been received, the input is sent to the web server 2104 and on to the display service engine 416 (step 2408). The display service engine 416 then sends the information regarding the input to the display client 422 as a user event, with a pointer to data posted by the browser 2108 (step 2412). That is, the message or other data related to the event is posted to a buffer, for example associated with the communication link over which the interface engines 424 communicate. The display client 422 then retrieves the data from the buffer and acts on the data (step 2416). Accordingly, the message associated with or comprising the event is communicated to the client application 422 as if the event were local to the client application 422. As can also be appreciated by one of skill in the art, a message comprising or associated with an event can also be communicated to a client application 422 directly, such as part of a data packet payload. For example, a message or other data can be communicated as an HTTP "get" command to get data or a "post" command to send an event or data to the client application 422. In general, whether data comprising an event, data and/or a message is delivered directly to a client application 422 or is placed in a buffer for retrieval by the client application depends on the communications link 916 between the platforms 104, 120, and therefore on the communication protocol used to transfer instructions and data between the interface engines 424.

At step 2420, a determination is made as to whether the display service 420 should be discontinued. A determination as to whether to discontinue the display service 420 may also be made if at step 2404 it is determined that a click has not been received on the page displayed by the browser 2108. If the service 420 is to continue, the process may return to step 2404 to await the detection of a click or other event. If the service 420 is to be discontinued, the process may end.

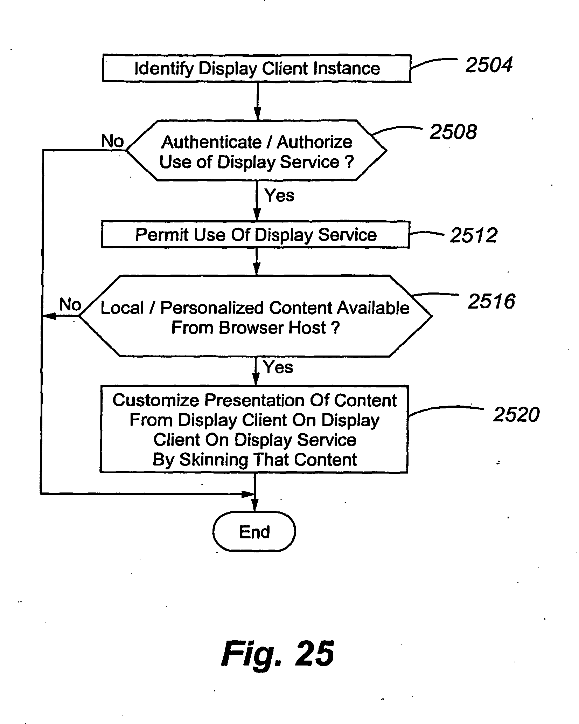

With reference now to Fig. 25, security and customized content aspects of embodiments of the present invention are described. In particular, at step 2504, the display client application 422 instance is identified. For example, the display service engine 416 may identify the display client application 422 instance. A determination may then be made as to whether the display client application 422 instance has been authenticated and/or whether use of the display services 420 available from the communications interface system 104 are authorized (step 2508). If use of the display service 420 is authorized, then use of the display service is permitted (step 2512). Authorization may include obtaining payment information from the user and/or remote platform 120.

A determination may then be made as to whether local or personalized content is available from the browser 2108 host (*i.e.*, the communications interface system 104) for the identified display client application 422 instance. If local or personalized content is available, the presentation of content from the display client application 422 on the display service is customized, for example by skinning that content (step 2520). Examples of such customized content may include the display of an advertising logo, for example associated with the supplier or manufacturer of the communications interface system 104, or content maintained on or in association with communications interface system 104 that is determined to be particularly suitable for the identified display client application 422 or a registered user of the display client application 422. If the display client application 422 instance is not authenticated or authorized to use the display service 420, or after permitting use of the display service 420, but determining that local or personalized content is not available, the process of authenticating and selecting customized or personalized content may end.

In accordance with embodiments of the present invention, content presented to a user through facilities provided by the server platform or communications interface system 104 may originate from multiple sources. For example, the skinning of content may comprise combining content from a source native to or associated with the communications interface system 104 with content from the client application 422. For instance, the communications interface system 104 may create a frame consisting of content originating from a source local to the communications interface system 104 and content provided from the client application 422 may be contained by that frame. As a further example, a display resource provided by the communications interface system 104 may simultaneously display content from different sources, for example in different frames. Furthermore, the sources of such content may include a source associated with a client application 422 and a source associated with the communications interface system 104. As an example, where the communications interface system is associated with an automobile, a source of content relating to operational parameters of that automobile may be displayed in a first frame, while content comprising menu items that can be selected for controlling aspects of the operation of a remote platform 120 comprising a portable telephone being used as a container for content comprising songs or other audio content may be displayed in a second frame.

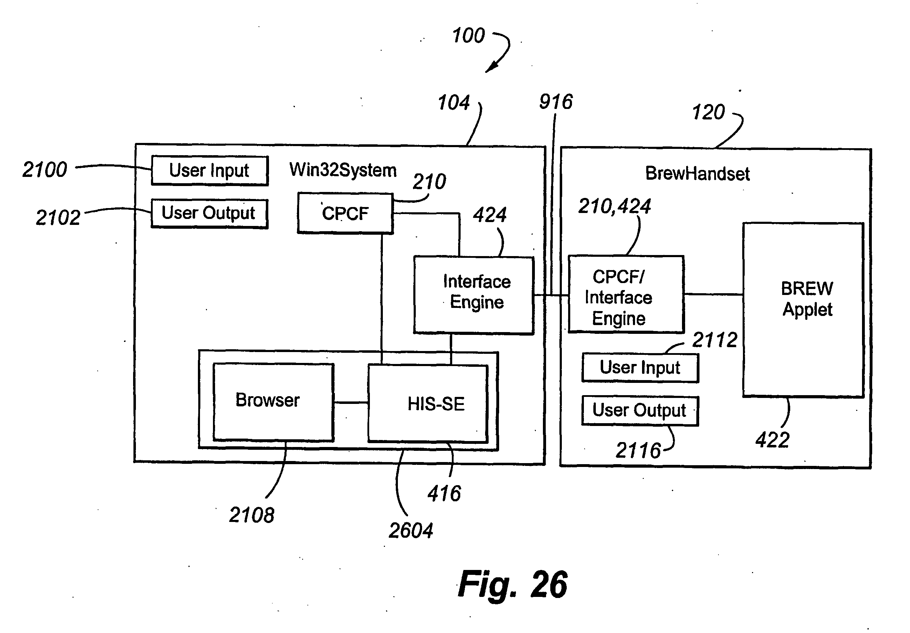

With reference now to Fig. 26, components of a communications system 100 in accordance with further embodiments of the present invention are depicted. In general, the communications system 100 illustrated in Fig. 26 is similar to the communications system 100 illustrated in Fig. 21. However, the communications system 100 in Fig. 26 includes a service comprising a display resource 2604. The display resource 2604 includes a browser 2108 and a human interface system service engine (HIS-SE) 416 that incorporates the functions of the web server 2104 included in the embodiment illustrated in Fig. 21. Therefore, the communications system 100 illustrated in Fig. 26 does not include a separate web server 2104.

The communications system interface 104 may generally comprise a service platform with components running on a Microsoft Windows™ system. For example, the communications interface system 104 may comprise an automobile head unit and/or computer system, for instance a system that provides a navigational and/or audio system, running a Windows CE™ automotive operating system. Furthermore, the browser 2108 may comprise a standard browser, such as a Netscape™ 4.8 browser. The connection framework process 210 is a framework module that facilitates service advertisement and discovery, and that coordinates access to advertised services, as described elsewhere herein. Similarly, the interface engine 424 is in communication with the connection framework process 210. As described elsewhere herein, the interface engine 424 transparently handles translation between the interprocess communication mechanisms of the communications interface system 104, for example WIN 32 interprocess communications mechanisms, and the interface between the communications interface system 104 and the remote platform 120. In addition, the interface engine 424 handles the advertisement of and access to services available on the communications interface system 104 to the remote platform 120. The service engine 416 illustrated in Fig. 26 comprises a human interface system service engine (HIS-SE) that enables a client application 422 to utilize the capabilities of the browser 2108.

The remote platform 120, according to exemplary embodiments of the present invention, may comprise a mobile device such as a cellular telephone, personal digital assistant, portable music player, or other types of devices. According to one example, the remote platform 120 comprises a cellular telephone utilizing the BREW application environment or platform, available from Qualcomm™. The remote platform 120 includes a combined connection framework process 210 and interface engine 424, which generally provide the same capabilities as the corresponding components on the communications interface system 104. In the example of Fig. 26, the connection framework process 210 and interface engine 424 are shown as combined modules, because in connection with certain environments, such as a BREW environment, providing the functions of such modules in a single combined module can be more expedient, as the BREW environment is not as supportive of multitasking as are other environments, such as the WIN 32 environment of a communications interface system 104. Accordingly, whether to provide such modules as the connection framework process 210 or the interface engine 424 as combined modules may depend on the operating system and/or environment of the platform 104, 120. The client application 422 is shown in Fig. 26 as a BREW applet. In general, the client application 422 may be a software application running on an operating system or platform that is capable of performing functions in connection with user input devices 2100 and/or 2112 and/or user output devices 2102 and/or 2116.

In accordance with embodiments of the present invention, the system 100 enables applications 422 associated with a remote platform 120 to utilize and/or operate in conjunction with capabilities available from an interconnected communications interface system 104. An example is in connection with a remote platform 120 comprising a portable device, such as a cellular telephone, personal digital assistant, or MP3 or other media player, such as the iPod or iPod photo available from Apple, and having limited or no display capabilities, connects to a communications interface system 104 to use a display included as a user output 2102 of the communications interface system 104. More particularly, the client application 422 is, according to embodiments of the present invention, able to manipulate the browser 2108 running on the communications interface system 104 by sending content to the browser 2108. In connection with such functionality, the service engine 416 provides the connectivity necessary for client applications 422 to push content to the browser 2108, and receive responses from the browser 2108 resulting from user inputs or inputs from other outside sources.

In connection with the provision of content to a user through a browser 2108, such content may be in accordance with the document object model (DOM), which is a W3C specification describing an object based representation of HTML pages. In particular, all of the elements of a page, such as images, tags, links (URLs), frames, etc. are represented in the DOM. Using JavaScript, VBscript or other browser supported scripting language, the objects of the DOM may be modified on the fly. Accordingly, a client application 422 can modify the page displayed through the browser 2108 in response to the needs of the application 422 running on the remote platform 120.

User inputs may be collected by the browser 2108 interface (for example in connection with a pointing device or other user input 2100 operating in connection with a display or other user output 2102) and posted to the remote platform 120 client application 422 by posting an HTML form. Coupled with a scripting language, the user inputs may be "sanity checked" prior to posting to the remote device 120 client application 422. Accordingly, the typically greater display area of a display provided as part of an automobile head unit, or other computer platform comprising a communications interface system 104, compared to the typical capabilities of a remote platform 120 comprising a mobile device, can be used to advantage. In addition, the content of data passed between the client application 422 and the browser 2108 need not be of any particular type. For example, various multimedia Internet message extensions (MIME) types can be applied in connection with providing data from a client application 422 to the browser 2108. Furthermore, such data can comprise streaming digital media, as well as more static data content.

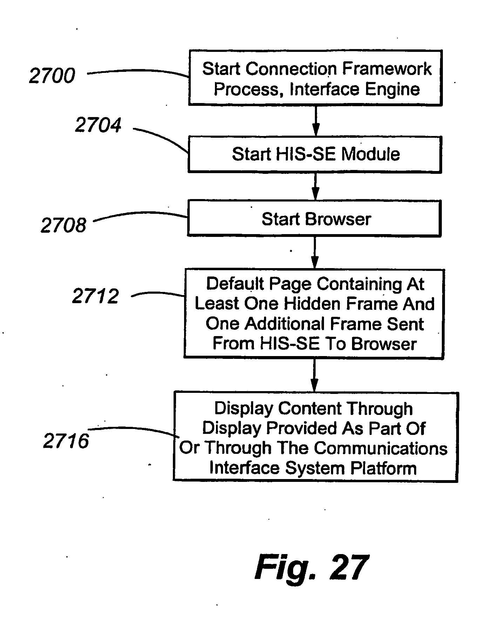

With reference now to Fig. 27, aspects of the operation of a system 100 incorporating an integrated display resource 2604 are illustrated. Initially, at step 2700, the connection framework process module 210 on the communications interface system 104 is started. In connection with the start of the connection framework process, the interface engine 424 may also be started to enable communications with a remote platform 120. For example, the interface engine 424 may be started by the connection framework process 210. At step 2704, the HIS-SE module 416 is started. The HIS-SE 416 may be started by the connection framework process 210 at boot time, or later when a service available through the HIS-SE 416 is requested. Upon start up, the HIS-SE 416 connects to the connection framework process 210 and advertises the availability of the HIS-SE 416 service. At step 2708, the browser 2108 is started. The browser 2108 may be started by the HIS-SE 416 module. Upon start up, the browser 2108 is pointed at the HIS-SE 416 port, and a socket connection is established. HIS-SE 416 port may be the "default page" of the browser 2108.

When the connection is established between the browser 2108 and HIS-SE 416, a default HTML page is sent from the HIS-SE 416 to the browser 2108 (step 2712). This page contains at least two HTML frames; a hidden frame and one or more visible frames. The hidden frame has a source URL that refers to the HIS-SE 416 module. The browser 2108 establishes a connection to the HIS-SE 416 and requests the source for the hidden frame. This connection for the hidden frame source is maintained through the period during which the service (in the present example the display resource 2604) is available. The default HTML page also contains a function for each visible frame that enables writing to each frame's document object. For example, such functionality may be provided through a JavaScript function. Utilizing calls at these functions, the HIS-SE 416 can push content to any visible frame on the page at any time a client application requires. The content is pushed through the connection to the hidden frame that is maintained while the service is available. At step 2716, content is displayed through a display provided as a user output 2102. For example, the display portions of a default HTML page may contain HTML content such as a catalog of client applications 422 available on an interconnected remote platform 120, or templates for the display of such a catalog. The displayed portions may also obtain content from one or more outside sources, such as the manufacturer of the automobile of which the communications interface system 104 is associated, traffic report sources, weather report sources, digital entertainment sources, or other sources, whether provided directly through the communications interface system 104 or through one or more interconnected remote platforms 120. As can be appreciated by one of skill in the art from the description provided herein, the order of the described steps may be altered.

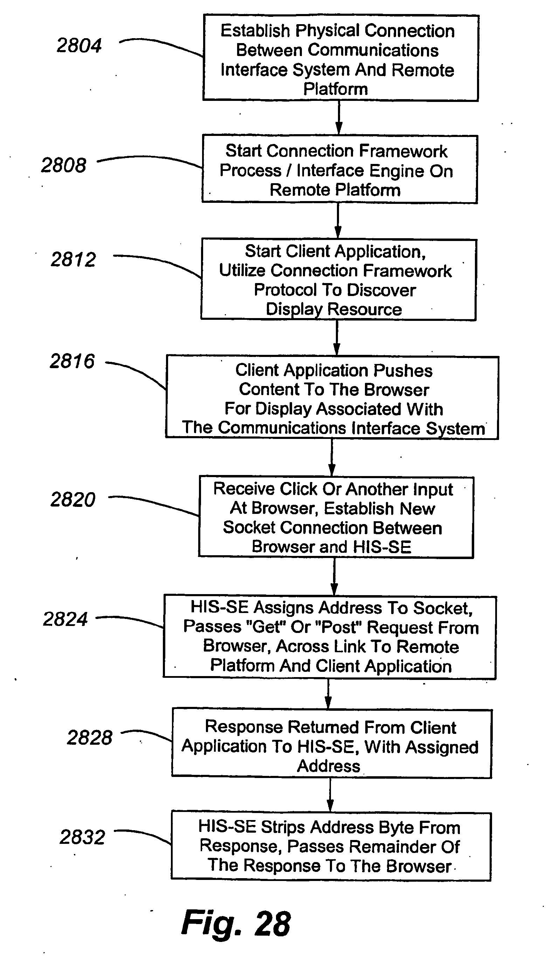

With reference now to Fig. 28, aspects of the operation of a remote platform 120 comprising a cellular telephone placed in communication with a communications interface system 104 across a communication link 916, and running one or more applications 422, are illustrated. For example, the remote platform 120 may comprise a cellular telephone providing a BREW platform for BREW applications 422. At step 2804, communications between the remote platform 120 and the communications interface system 104 are enabled by establishing a physical connection. This may comprise establishing a wireline connection, for example through interconnecting a universal serial bus or other wireline connector, or by establishing some other type of wireline or wireless communication channel. At step 2808, the connection framework process and interface engine 210, 424 is started. When the connection framework interface engine 210, 424 module initializes, it receives "Estab" messages from the communications interface system 104, and lists of available services are exchanged, according to the connection framework process protocol. In accordance with embodiments of the present invention, the connection framework process/interface engine 210, 424 module can be started in response to a request by an application 422 for services that might be available from an interconnected communications interface system 104.

The client application 422, in the present example a BREW applet, is started and the connection framework process protocol is utilized to discover the availability and location of the display resource 2604 (step 2812). The BREW applet 422 then opens an instance of the display resource 2604 service.

After opening an instance of the display resource 2604, the BREW applet 422 pushes content to the browser 2108 for display by a user output device 2102 associated with the communications interface system 104 (step 2816). This content may be in the form of calls to one or more of the frame access functions, passing arguments to those functions that represent the content to be written to the respective frame documents. Aspects of the displayed frames may be modified from the BREW applet 422, for example using the document object model. Furthermore, the content pushed to the browser 2108 may be updated as required by the BREW applet 422 by pushing that content to a displayed frame through the hidden frame. More particularly, the header of the hidden frame may include functions to write displayed frames, and the applet can send JavaScript that includes a call to such a function to update the associated displayed frame. Furthermore, this can be done at any time, because the hidden frame is never terminated (*i*.*e*., it is persistent).

When a page displayed by the browser 2108 contains a link back to the default page source (the HIS-SE 416), clicking on this link will cause a new request (e.g., an HTTP "get" or "post") to be generated by the browser 2108. This request will establish a new socket connection between the browser 2108 and the HIS-SE 416 (step 2829). The HIS-SE 416 may then assign a simple one byte address to the socket, and pass the request with this address to the brew applet 422 utilizing the display resource 2604 (step 2824). The request may represent a command being sent by the user to the brew applet 422, or the posting information to be used by the applet 422. At step 2828, the applet 422 prepends the assigned address byte to its response, and, so addressed, returns the response to the HIS-SE 416. The HIS-SE will then strip the address byte, and pass the remainder of the response to the browser 2108 via the proper socket (*i*.*e*., the socket identified by the address byte) (step 2832). Accordingly, it can be appreciated that in addition to the persistent socket maintained between the hidden frame of the browser 2108 and the HIS-SE 416 for pushing content from the applet 422, any number of transient sockets may be established for handling requests generated as a result of user input at or through the browser 2108. Furthermore, it can be appreciated that the browser 2108 in association with embodiments that provide for the establishment of a persistent hidden frame for allowing content to be pushed to the browser 2108 from a client application 422 need not include a plug-in for that purpose. Accordingly, no modifications to or special provisions for an off-the-shelf browser 2108 are required. As can be appreciated by one of skill in the art from the description provided herein, the order of the described steps may be altered.

In accordance with further embodiments of the present invention, the functions of the HIS-SE 416 are not only combined with the functions of a web server 2104, but are also combined with the functions of a browser 2108, to provide a single integrated display service component 2604. Such a display service 2604 permits authenticated client applications 422 to connect to and disconnect from the display service 2604 at their convenience. Furthermore, such embodiments do not require that a persistent connection be maintained between the HIS-SE 416 and the browser 2108 through the use of a hidden frame in order for a service instance to remain open. That is, by providing a specialized display service 2604, an ability to respond to new or updated content when such content is available from a client application 422 can be built into the display service 2604, instead of requiring a persistent channel to a hidden frame of a conventional browser 2108.

Although certain of the description contained herein has described a remote platform 120 as being less capable than a communications interface system 104 in one or more ways, embodiments of the present invention are not so limited. In particular, a remote platform 120 can (and often will) extend the capabilities and/or features of a communications interface system 104 functioning as a service platform. For example, a remote platform 120 may provide content and/or connectivity not otherwise available to a communications interface system 104.

Furthermore, while certain examples provided herein have discussed the provision of content to a display device on a communications interface system 104, other forms of content may be provided. For instance, audio content may be provided. Furthermore, it can be appreciated that a display service 2604 provided by a communications interface system 104 can be provided in support of another service provided by another platform or by the same communications interface system 104. For instance, a remote platform 120 comprising a telephone or other container for content being used as a storage medium for audio content may include a client application 422 that subscribes to a display service 2604 in order to display menu items to a user. Furthermore, the user may make selections from those menu items through user inputs 2100 provided as part of the communications interface system 104. That same client application 422 or another client application 422 operating in cooperation with the first client application 422 may provide audio data through the interface engines 424 to another service engine 416 running on the communications interface system 104. Accordingly, an example context for such connectivity is where the remote platform 120 comprises a cellular telephone or portable music player and is being used as a container for audio content, and a communications interface system 104 comprising the head unit of an automobile, in which the display is an in-dash display that, for example, can be used in connection with a navigation system, and an audio system comprising the automobile's stereo system.

As an example of embodiments in which a client application 422 and a remote platform 120 uses a service comprising audio capabilities available from a communications interface system 104, a client application 422 may initially discover and locate the available service through the connection framework processes 210 and interface engines 424. The client application 422 initiates an "open service" routine with the service provider (*i*.*e*., the communications interface system) 104. The communications interface system or service provider 104 opens a channel to the client 422 on the remote platform 120, and the service provider 104 persistently "listens" on that channel for new information. For example, where the service comprises an audio/video service, the service provider 104 listens on the channel to the client 422 for new audio/visual information. Examples of such information are MP3 audio, MPEG audio/video, and raw audio stream data. When the client application 422 has new information to present to the user, it pushes the information to the service platform 104 via the persistent channel. It does so without any request for information from the service on the service platform 104. The service thus receives the information and renders it as it sees fit. For example, the service may choose to discontinue existing information and play only new information. In addition, the service platform 104 may mix the new information with existing information or may time division multiplex the new information with existing information.

In an example scenario involving the use of an audio service available in an automobile, the service platform or communications interface system 104 comprises an automobile head unit, while the remote platform 120 comprises an MP3 enabled cellular telephone. Furthermore, the automobile head unit may provide an MP3 audio service, which understands how to decode MP3 formatted digital music and play it through the automobile's stereo system. This MP3 audio service is registered as a service with the in-vehicle connection framework process 210. A user may interconnect the MP3 enabled cellular telephone 120 with the vehicle head unit 104 by docking the cellular telephone 120 in a cradle that provides a physical interconnection or link 916 to the head unit 104. A client application 422 on the cellular telephone 120 establishes communication, via an interface engine 424 with the connection framework process 210, and queries for available services. The connection framework process 210 responds with the MP3 audio service. The client application 422 waits for the user to select an MP3 file on the phone menu. When the selection is made, the client application 422 opens a connection to the audio service via an "open service" message. The audio service, for example by operation of an audio service engine 416, responds with a communications channel upon which it can receive MP3 audio. The client application 422 pushes an MP3 encoded audio stream to the audio service provided by the head unit 104. The audio service decodes the stream, for example through operation of a service engine 416, and outputs it through the automobile stereo system. The cellular telephone 120 continues pushing MP3 formatted audio to the audio service until either the end of data is encountered or some action is taken by the user to terminate the current stream or to start a new stream.

As can be appreciated by one of skill in the art, the example given above in connection with the pushing of audio stream data to a service platform 104 is different in many respects from conventional media players that are capable of playing audio and/or video information that is resident elsewhere. In particular, conventional systems have typically required that the media player initiate retrieval of information via some request mechanism. For example, this request may be in the form of a file open call to the operating system, or an HTTP "get" command. That is, the media player must retrieve the information, in contrast to embodiments of the present invention that allow a device containing content to push that content to a service provider for playback.

In accordance with further embodiments of the present invention, bidirectional communications between a service platform 104 and a remote platform 120 are supported, for example in connection with a user interface service running on the service platform 104. In particular, once a user interface service has been discovered and located, a client application 422 initiates an "open service" with the service platform 104. The service platform 104 opens a channel to the client application 422 running on a remote platform 120 and persistently "listens" on that channel for new user interface information. When the client application 422 has new information to present to the user, it formats a mark-up page, such as voice XML, and pushes it to the service platform 104. The service platform 104, even though it may have already had a page in context, for example displayed by a browser 2108, receives the new page and presents it as it sees fit. For example, existing content may be replaced with the new content, the existing content and new content may be added to one another, or the service platform 104 may switch between displaying the existing content and the new content dynamically. Furthermore, content provided by a client application 422, that is, for example, output by a display service, may provide functions in association with other services. For instance, an automatic speech recognition system provided as a service of the service platform 104 may send a notification back to the client application 422 when a word included in a new page comprising content from the client application 422 is recognized. In response to the notification, the client application 422 may elect to format a new page and push it to the service provider 104, or take some other action. Accordingly, the client application 422 running on the remote platform 120 dictates what user interface is in context in real time. In particular, the client application 422 does not wait for a service to request a page based on some user action.

In an example scenario involving bidirectional communications, a speech user interface service may be available through a service platform 104 comprising the head unit of an automobile. By default, this user interface may control the heating, radio, seat adjustment or other functions associated with the automobile. In accordance with embodiments of the present invention, the speech user interface service registers its availability with the connection framework process 210. If a user brings an MP3 capable cellular telephone 120 into the automobile and docks it in a cradle, a client application 422 may establish communications with the in-vehicle connection framework process 210 through a connection framework process 210 associated with the remote platform 120 and through interface engines 424. The client application 422 may therefore determine through the connection framework process 210 that a speech user interface is available, and the client application 422 may then open a connection to the speech user interface service via an "open service" command. The speech service replies with a channel identifier upon which it is listening for application data. The client application 422 may then construct a voice XML page that it sends to the speech user interface service. This document represents a speech dialog system with the recognition word "MP3" as part of its grammar. The speech user interface service adds this grammar word to its current page. Thus, the current set of available user commands may, for example, comprise "heating," "radio," "seats," and "MP3." When the user speaks the word "MP3," the automatic speech recognizer associated with the speech user interface service recognizes this word and notification of the event (*i*.*e*., recognition of the word "MP3") is sent back to the client application 422. In response, the client application 422 retrieves a list of MP3 song titles from its memory, constructs a new page consisting of these song titles, and sends it to the speech service. The speech service may then update its current context to include, for example, "track number 1," "track number 2" etc. If the user speaks "track number 1" for instance, notification is provided back to the client application 422, and the client application 422 responds with the streaming MP3 formatted data for track number 1 in its memory.

The client application 422 is free to push new pages to the speech user interface service at any time. For instance, if the client application 422 on the remote platform 120 was pushing an MP3 file or page to the speech user interface service, while concurrently running or operating as a navigation application in which notification of an upcoming turn is necessary, the client application 422 may elect to stop the current information transfer and play an appropriate audio prompt ("turn left here"). The client application 422 may then resume with the MP3 stream. Furthermore, if one client application 422 was providing audio content comprising the requested track, while another client application 422 or another service running on the service platform 104 or on another remote platform 120 or, for example, operating to provide navigation information, such other client application 422 or service may interrupt playback of the MP3 audio stream to provide navigation information. It should be noted that, in order to interrupt the MP3 audio stream and provide navigation information according to these examples, it is not necessary for the service provider to issue a request for a new page. Instead, each client application 422 or service having audio information may push data comprising the audio information to the speech service independently. Accordingly, it may be up to the speech service to decide how best to present audio information when presented with multiple streams of such information.

Similarly, if a client application 422 running on a remote platform pushed a page representing a user interface consisting of "MP3" and "phone control," it could update the page based on the occurrence of a telephone event. For example, if an incoming phone call occurred, the telephone may push a new page, unsolicited by the speech service, that only allowed the active recognition words to be "answer," "hang up," or "silence." The previous page, which included the word "MP3" may no longer be in context.

It should be appreciated by one of skill in the art after appreciation of the description provided herein that such embodiments differ from conventional systems, such as those that implement a voice XML browser. In particular, in the prior art a voice XML browser may initiate user data representation via a request for a voice XML page from a server using an HTTP:Get command. The server responds to this request with a voice XML page representing the user interface. This page may be as simple as the location of a certain audio file to play (via another request from the voice browser), or it may be as complex as a full dialog system representation. In the latter case, a local automatic speech recognition system will listen for an utterance by the user of any of the words presented in the voice XML page. If a word is recognized, the browser determines from the voice XML page what new page is to be retrieved, and initiates another page request to the server. The server responds with a new page, and the process repeats itself. It should further be noted that once a server sends a page in response to a request, it is no longer in control of the user interface. In particular, the server must wait for the voice browser to send another request for information.

In addition to mobile environments, it should be appreciated that embodiments of the present invention may be used in connection with the interconnection of a remote platform 120 to a communications system interface 104 comprising a stationary platform, such as a general purpose desktop computer or some other platform that can provide services to a remote platform 120. For example, the communications system interface 104 may comprise a universal desktop capable of providing services to or in cooperation with a mobile platform 120. Such services may include battery charging, high bandwidth area network connectivity, multilink capability, external radio frequency antenna, color and/or high resolution monitor, stereo speakers and data storage.

In addition to providing services such as audio services, a combination of communications interface system 104 and remote platform 120 may be used for multimedia applications. For example, a remote platform 120 comprising a cellular telephone having mobile TV capability may be interconnected to a communications interface system 104 to utilize the display and/or audio outputs of the communications interface system 104. Furthermore, in addition to potentially providing superior output to a user, a remote platform 120 can conserve battery power by using the output capabilities of a communications interface system 104.

Although various examples provided herein have described the deployment of communications interface systems 104 in vehicles, it should be appreciated that the present invention is not so limited. In particular, embodiments of the present invention may be deployed in or adapted for any use where interoperability between devices and applications, without requiring extensive prearrangement of protocols and messages, is desired. For example, communications interface system 104 functionality as described herein may be usefully deployed in connection with stationary or mobile work stations to provide flexible capabilities as devices available to the communications interface system 104 change.

The foregoing discussion of the invention has been presented for purposes of illustration and description. Further, the description is not intended to limit the invention to the form disclosed herein. Consequently, variations and modifications commensurate with the above teachings, within the skill and knowledge of the relevant art, are within the scope of the present invention. The embodiments described hereinabove are further intended to explain the best mode presently known of practicing the invention and to enable others skilled in the art to utilize the invention in such or in other embodiments with various modifications required by their particular application or use of the invention. It is intended that the appended claims be construed to include the alternative embodiments to the extent permitted by the prior art.

## Claims

1. An information transfer system (100), comprising:
a server apparatus (104), including:
a service engine (416);
a server communication interface (412) including a server connection framework process (210) having a services table (404) for advertising services available from devices or applications to other devices or applications associated with the server connection framework process, wherein one of said services comprises a server service facility of at least a first type and having a first set of capabilities;
a remote platform (120), including:
a client application (422);
a communication interface (424) compatible with said communication interface of said server apparatus;
a client connection framework process (210b); and
a client service facility of said at least said first type and having a second set of capabilities;
a communication channel, wherein said communication interface of said server apparatus and said communication interface of said remote platform are operably interconnected;
wherein said server communication interface, said server connection framework process, said client communication interface and said client connection framework process operate to advertise said server service facility to said client application, wherein said client application discovers said service facility of said server apparatus and establishes a logical communication path with said service facility through interaction between said client connection framework process and said server connection framework process, wherein after establishing said logical communication path data is passed from said client application to said server service facility over said communication channel using said logical communication path.

2. The system of Claim 1, wherein said client application pushes content to said server service facility.

3. The system of Claim 1, wherein said server service facility and said client service facility include display devices.

4. The system of Claim 3, wherein an area of said server display is greater than said client display.

5. The system of Claim 1, wherein said server service facility includes an audio service and said client application provides audio content.

6. The system of Claim 5, wherein said client application additionally provides visual content.

7. The system of Claim 1, wherein said first set of capabilities is greater than said second set of capabilities.

8. The system of Claim 1, wherein said server apparatus includes a user input, wherein a first user action received at said server user input is passed to said client application as a first event

9. The system of Claim 3, wherein said remote platform includes a user input, wherein a second user action received at said remote platform user input is received at said client application as said first event

10. The system of Claim 1, wherein said remote platform comprises a cellular telephone.

11. The system of Claim 1, wherein said server apparatus comprises a Win32 platform.

12. The system of Claim 1, wherein said server service facility comprises a visual display output device and a browser application.

13. A method of operating an information transfer system (100) to provide a service facility to a remote platform (120), wherein the information transfer system comprises a server apparatus (104) including a service engine (416) and a server communication interface (412) including a server connection framework process (210), said remote platform including a client application (422), a communication interface (424) compatible with said communication interface of said server apparatus, a client connection framework process (210b), and a client service facility of said at least a first type and having a first set of capabilities, said method comprising:
providing a services table (404) in the server connection framework process (210), said services table advertising services available from devices or applications to other devices or applications associated with the server connection framework process, wherein one of said services comprises a server service facility of at least said first type and having a second set of capabilities;
interconnecting said communication interface of said server apparatus and said communication interface of said remote platform by a communication channel;
operating said server communication interface, said server connection framework process, said client communication interface and said client connection framework process to advertise said server service facility to said client application, wherein said client application discovers said service facility of said server apparatus and establishes a logical communication path with said service facility through interaction between said client connection framework process and said server connection framework process; and
after establishing said logical communication path, passing data from said client application to said server service facility over said communication channel using said logical communication path.

14. The method of Claim 13, wherein said server service facility includes an output device that is interconnected to said information transfer system by a physical connection that is separate from said physical interconnection used to place said remote platform in communication with said server apparatus.

15. The method of Claim 14, wherein said server service facility includes a visual output device, and wherein said data comprises visual content displayed by said visual output device.

16. The method of Claim 15, further comprising:
receiving at a user input associated with said server apparatus a first event;
delivering said first event to said client application;
in response to receiving said first event at said client application, providing second data from said client application to said server service facility, wherein said visual content displayed by said visual output device is changed.

17. The method of Claim 15, further comprising:
receiving at a user input associated with said client application a first event;
in response to receiving said first event at said client application, providing second data from said client application to said server service facility, wherein said visual content displayed by said visual output device is changed.

18. The method of Claim 15, further comprising:
identifying said remote platform; and
associating said first additional content with said identified remote platform, wherein said visual content displayed by said visual output device includes said first additional content.

19. The method of Claim 15, wherein said service comprises a visual output device and a browser application, said method further comprising:
generating in said client application second data; and
providing said second data comprising second visual content from said client application to said server service facility, wherein said browser application retrieves and displays said second visual content as part of an auto refresh cycle.

## Patentansprüche

1. System zur Informationsübertragung (100), das umfasst:
eine Server-Vorrichtung (104) mit
einer Dienst-Engine (416)
einer Server-Kommunikationsschnittstelle (412), die einen Server-Verbindungs-Framework-Process (210) mit einer Diensttabelle (404) zum Anzeigen von Diensten, die von Geräten oder Anwendungen für andere Geräte oder Anwendungen, die mit dem Server-Verbindungs-Framework-Process verbunden sind, verfügbar sind, umfasst, wobei einer der Dienste eine Server-Diensteinrichtung wenigstens eines ersten Typs und mit einem ersten Satz von Funktionen umfasst,
eine entfernte Plattform (120) mit:
einer Client-Anwendung (422),
einer Kommunikationsschnittstelle (424), die mit der Kommunikationsschnittstelle der Server-Vorrichtung kompatibel ist,
einem Client-Verbindungs-Framework-Process (21 0b), und
einer Client-Diensteinrichtung wenigstens des ersten Typs und mit einem zweiten Satz von Funktionen,
einem Übertragungskanal, wobei die Kommunikationsschnittstelle der Server-Vorrichtung und die Kommunikationsschnittstelle der entfernten Plattform funktionsbereit miteinander verbunden sind,
wobei die Server-Kommunikationsschnittstelle, der Server-Verbindungs-Framework-Process, die Client-Kommunikationsschnittstelle und der Client-Verbindungs-Framework-Process bewirken, dass der Client-Anwendung die Server-Diensteinrichtung angezeigt wird, wobei die Client-Anwendung die Server-Diensteinrichtung der Server-Vorrichtung erkennt und einen logischen Kommunikationspfad mit der Diensteinrichtung durch Interaktion zwischen dem Client-Verbindungs-Framework-Process und dem Server-Verbindungs-Framework-Process einrichtet, wobei nach Einrichten des logischen Kommunikationspfads Daten von der Client-Anwendung an die Server-Diensteinrichtung über den Übertragungskanal unter Verwendung des logischen Kommunikationspfads übertragen werden.

2. System nach Anspruch 1, wobei die Client-Anwendung den Inhalt an die Server-Diensteinrichtung weiterleitet.

3. System nach Anspruch 1, wobei die Server-Diensteinrichtung und die Client-Diensteinrichtung Anzeigegeräte umfassen.

4. System nach Anspruch 3, wobei eine Fläche der Server-Anzeige größer ist als die Client-Anzeige.

5. System nach Anspruch 1, wobei die Server-Diensteinrichtung einen Audio-Dienst umfasst und die Client-Anwendung einen Audio-Inhalt bereitstellt.

6. System nach Anspruch 5, wobei die Client-Anwendung darüber hinaus einen visuellen Inhalt bereitstellt.

7. System nach Anspruch 1, wobei der erste Satz von Funktionen größer ist als der zweite Satz von Funktionen.

8. System nach Anspruch 1, wobei die Server-Vorrichtung eine Benutzereingabe umfasst, wobei eine erste Benutzeraktion, die von der Benutzereingabe des Servers empfangen wurde, als ein erstes Ereignis an die Client-Anwendung übertragen wird.

9. System nach Anspruch 3, wobei die entfernte Plattform eine Benutzereingabe umfasst, wobei eine zweite Benutzeraktion, die von der Benutzereingabe der entfernten Plattform empfangen wurde, als das erste Ereignis von der Client-Anwendung empfangen wird.

10. System nach Anspruch 1, wobei die entfernte Plattform ein Mobiltelefon umfasst.

11. System nach Anspruch 1, wobei die Server-Vorrichtung eine Win32-Plattform umfasst.

12. System nach Anspruch 1, wobei die Server-Diensteinrichtung ein visuelles Anzeige-Ausgabegerät und eine Browser-Anwendung umfasst.

13. Verfahren zum Betreiben eines Systems zur Informationsübertragung (100), um eine Diensteinrichtung für eine entfernte Plattform (120) bereitzustellen, wobei das System zur Informationsübertragung eine Server-Vorrichtung (104) mit einer Dienst-Engine (416) sowie eine Server-Kommunikationsschnittstelle (412) mit einem Server-Verbindungs-Framework-Process (210) umfasst, wobei die entfernte Plattform über eine Client-Anwendung (422), eine Kommunikationsschnittstelle, die mit der Kommunikationsstelle der Server-Vorrichtung kompatibel ist, einen Client-Verbindungs-Framework-Process (210b) sowie eine Client-Diensteinrichtung wenigstens eines ersten Typs und mit einem ersten Satz von Funktionen verfügt, wobei das Verfahren umfasst:
Bereitstellen einer Diensttabelle (404) in dem Server-Verbindungs-Framework-Process (210), wobei die Diensttabelle Dienste anzeigt, die von Geräten oder Anwendungen für andere Geräte oder Anwendungen in Zusammenhang mit dem Server-Verbindungs-Framework-Process verfügbar sind, wobei einer der Dienste eine Server-Diensteinrichtung wenigstens des ersten Typs umfasst und einen zweiten Satz von Funktionen aufweist,
Verbinden der Kommunikationsschnittstelle der Server-Vorrichtung und der Kommunikationsschnittstelle der entfernen Plattform durch einen Übertragungskanal,
Betreiben der Server-Kommunikationsschnittstelle, des Server-Verbindungs-Framework-Process, der Client-Kommunikationsschnittstelle und des Client-Verbindungs-Framework-Process, um der Client-Anwendung die Server-Diensteinrichtung anzuzeigen, wobei die Client-Anwendung die Server-Diensteinrichtung der Server-Vorrichtung erkennt und einen logischen Kommunikationspfad mit der Diensteinrichtung durch Interaktion zwischen dem Client-Verbindungs-Framework-Process und dem Server-Verbindungs-Framework-Process einrichtet, und
nach dem Einrichten des logischen Kommunikationspfads Übertragen von Daten von der Client-Anwendung an die Server-Diensteinrichtung über den Übertragungskanal unter Verwendung des logischen Kommunikationspfads.

14. Verfahren nach Anspruch 13, wobei die Server-Diensteinrichtung ein Ausgabegerät umfasst, das mit dem System zur Informationsübertragung über eine physikalische Verbindung verbunden ist, die unabhängig von der physikalischen Verbindung ist, die verwendet wird, um die Kommunikation zwischen der entfernten Plattform und der Server-Vorrichtung herzustellen.

15. Verfahren nach Anspruch 14, wobei die Server-Diensteinrichtung ein visuelles Ausgabegerät umfasst und wobei die Daten einen visuellen Inhalt umfassen, der von dem visuellen Ausgabegerät angezeigt wird.

16. Verfahren nach Anspruch 15, das darüber hinaus umfasst:
Empfangen eines ersten Ereignisses an einer Benutzereingabe, die mit der Server-Vorrichtung verbunden ist,
Übertragen des ersten Ereignisses an die Client-Anwendung,
als Antwort auf das Empfangen des ersten Ereignisses von der Client-Anwendung, Bereitstellen von zweiten Daten von der Client-Anwendung für die Server-Diensteinrichtung, wobei der von dem visuellen Ausgabegerät angezeigte visuelle Inhalt geändert wird.

17. Verfahren nach Anspruch 15, das darüber hinaus umfasst:
Empfangen eines ersten Ereignisses an einer Benutzereingabe, die mit der Client-Anwendung verbunden ist,
als Antwort auf das Empfangen des ersten Ereignisses von der Client-Anwendung, Bereitstellen von zweiten Daten von der Client-Anwendung für die Server-Diensteinrichtung, wobei der von dem visuellen Ausgabegerät angezeigte visuelle Inhalt geändert wird.

18. Verfahren nach Anspruch 15, das darüber hinaus umfasst:
Erkennen der entfernten Plattform, und
Zuordnen des ersten zusätzlichen Inhalts zu der erkannten entfernten Plattform, wobei der von dem visuellen Ausgabegerät angezeigte visuelle Inhalt den ersten zusätzlichen Inhalt umfasst.

19. Verfahren nach Anspruch 15, wobei der Dienst ein visuelles Ausgabegerät und eine Browser-Anwendung umfasst, wobei das Verfahren darüber hinaus umfasst:
Erzeugen von zweiten Daten in der Client-Anwendung, und
Bereitstellen der zweiten Daten, die einen zweiten visuellen Inhalt der Client-Anwendung für die Server-Diensteinrichtung umfassen, wobei die Browser-Anwendung den zweiten visuellen Inhalt als Teil eines automatischen Aktualisierungszyklus abruft und anzeigt.

## Revendications

1. Système de transfert d'informations (100), comprenant :
un dispositif serveur (104) comprenant :
- un moteur de services (416) ;
- une interface de communication de serveur (412) comprenant un processus d'infrastructure de connexion de serveur (210) comportant une table de services (404) pour faire la publicité de services disponibles à partir de dispositifs ou d'applications à d'autres dispositifs ou applications associés au processus d'infrastructure de connexion de serveur, dans laquelle un desdits services comprend une facilité de service serveur d'au moins un premier type et ayant un premier ensemble de capacités ;
une plateforme à distance (120) comprenant :
- une application client (422) ;
- une interface de communication (424) compatible avec ladite interface de communication dudit dispositif serveur ;
- un processus d'infrastructure de connexion de client (210b) ; et
- une facilité de service client dudit au moins dit premier type et ayant un deuxième ensemble de capacités ;
un canal de communication, dans lequel ladite interface de communication dudit dispositif serveur et ladite interface de communication de ladite plateforme à distance sont interconnectées fonctionnellement ;
dans lequel ladite interface de communication de serveur, ledit processus d'infrastructure de connexion de serveur, ladite interface de communication de client et ledit processus d'infrastructure de connexion de client fonctionnent pour faire la publicité de ladite facilité de service serveur à ladite application client, dans laquelle ladite application client découvre ladite facilité de service dudit dispositif serveur et
établit un parcours de communication logique avec ladite facilité de service par interaction entre ledit processus d'infrastructure de connexion de client et ledit processus d'infrastructure de connexion de serveur, dans laquelle, après établissement dudit parcours de communication logique, des données sont transmises de ladite application client à ladite facilité de service serveur sur ledit canal de communication en utilisant ledit parcours de communication logique.

2. Système selon la revendication 1, dans lequel ladite application client dépose un contenu dans ladite facilité de service serveur.

3. Système selon la revendication 1, dans lequel ladite facilité de service serveur et ladite facilité de service client comprennent des dispositifs d'affichage.

4. Système selon la revendication 3, dans lequel une zone dudit affichage de serveur est plus grande que ledit affichage de client.

5. Système selon la revendication 1, dans lequel ladite facilité de service serveur comprend un service audio et ladite application client fournit un contenu audio.

6. Système selon la revendication 5, dans lequel ladite application client fournit en plus un contenu visuel.

7. Système selon la revendication 1, dans lequel ledit premier ensemble de capacités est plus grand que ledit deuxième ensemble de capacités.

8. Système selon la revendication 1, dans lequel ledit dispositif serveur comprend une entrée utilisateur, dans laquelle une première action d'utilisateur reçue au niveau de ladite entrée utilisateur de serveur est transmise à ladite application client comme un premier événement.

9. Système selon la revendication 3, dans lequel ladite plateforme à distance comprend une entrée utilisateur, dans laquelle une deuxième action d'utilisateur reçue au niveau de ladite entrée utilisateur de plateforme à distance est reçue au niveau de ladite application client comme ledit premier événement.

10. Système selon la revendication 1, dans lequel ladite plateforme à distance comprend un téléphone cellulaire.

11. Système selon la revendication 1, dans lequel ledit dispositif serveur comprend une plateforme Win32.

12. Système selon la revendication 1, dans lequel la facilité de service serveur comprend un dispositif de sortie d'affichage visuel et une application de navigateur.

13. Procédé pour faire fonctionner un système de transfert d'informations (100) pour fournir une facilité de service à une plateforme à distance (120), dans lequel le système de transfert d'informations comprend un dispositif serveur (104) comprenant un moteur de services (416) et une interface de communication de serveur (412) comprenant un processus d'infrastructure de connexion de serveur (210), ladite plateforme à distance comprenant une application client (422), une interface de communication (424) compatible avec ladite interface de communication dudit dispositif serveur, un processus d'infrastructure de connexion de client (210b) et une facilité de service client dudit au moins un premier type et ayant un premier ensemble de capacités, ledit procédé comprenant :
la fourniture d'une table de services (404) dans le processus d'infrastructure de connexion de serveur (210), ladite table de services faisant la publicité de services disponibles à partir de dispositifs ou d'applications à d'autres dispositifs ou
applications associés au processus d'infrastructure de connexion de serveur, dans laquelle un desdits services comprend une facilité de service serveur d'au moins ledit premier type et ayant un deuxième ensemble de capacités ;
l'interconnexion de ladite interface de communication dudit dispositif serveur et de ladite interface de communication de ladite plateforme à distance par un canal de communication ;
le fonctionnement de ladite interface de communication de serveur, dudit processus d'infrastructure de connexion de serveur, de ladite interface de communication de client et dudit processus d'infrastructure de connexion de client fonctionne pour faire la publicité de ladite facilité de service serveur à ladite application client, dans lequel ladite application client découvre ladite facilité de service dudit dispositif serveur et
établit un parcours de communication logique avec ladite facilité de service par interaction entre ledit processus d'infrastructure de connexion de client et ledit processus d'infrastructure de connexion de serveur ; et
après établissement dudit parcours de communication logique, la transmission de données de ladite application client à ladite facilité de service serveur sur ledit canal de communication en utilisant ledit parcours de communication logique.

14. Procédé selon la revendication 13, dans lequel ladite facilité de service serveur comprend un dispositif de sortie qui est interconnecté avec ledit système de transfert d'informations par une connexion physique qui est séparée de ladite interconnexion physique utilisée pour mettre ladite plateforme à distance en communication avec ledit dispositif serveur.

15. Procédé selon la revendication 14, dans lequel ladite facilité de service serveur comprend un dispositif de sortie visuelle et dans lequel lesdites données comprennent un contenu visuel visualisé par ledit dispositif de sortie visuelle.

16. Procédé selon la revendication 15, comprenant en outre :
la réception d'un premier événement sur une entrée utilisateur associée audit dispositif serveur ;
la fourniture dudit premier événement à ladite application client ;
en réponse à la réception dudit premier événement au niveau de ladite application client, la fourniture de deuxièmes données de ladite application client à ladite facilité de service serveur, dans lequel ledit contenu visuel visualisé par ledit dispositif de sortie visuelle est changé.

17. Procédé selon la revendication 15, comprenant en outre :
la réception d'un premier événement sur une entrée utilisateur associée à ladite application client ;
en réponse à la réception dudit premier événement au niveau de ladite application client, la fourniture de deuxièmes données de ladite application client à ladite facilité de service serveur, dans lequel ledit contenu visuel visualisé par ledit dispositif de sortie visuelle est changé.

18. Procédé selon la revendication 15, comprenant en outre :
l'identification de ladite plateforme à distance ; et
l'association dudit premier contenu additionnel à ladite plateforme à distance identifiée, dans lequel ledit contenu visuel visualisé par ledit dispositif de sortie visuelle comprend ledit premier contenu additionnel.

19. Procédé selon la revendication 15, dans lequel ledit service comprend un dispositif de sortie visuelle et une application de navigateur, ledit procédé comprenant en outre :
la génération de deuxièmes données dans ladite application client ; et
la fourniture desdites deuxièmes données comprenant un deuxième contenu visuel de ladite application client à ladite facilité de service serveur, dans lequel ladite application de navigateur récupère et visualise ledit deuxième contenu visuel comme une partie d'un cycle de rafraîchissement automatique.
